# EUROPÄISCHE PATENTSCHRIFT

(11) **EP 3 953 144 B1**
(45) Veröffentlichungstag und Bekanntmachung des Hinweises auf die Patenterteilung: **14.01.2026**
(21) Anmeldenummer: 20712304.3
(22) Anmeldetag: 17.03.2020
(51) Int. Cl.: G05B 19/4099, B33Y 50/00

(54) **VERFAHREN ZUR ADDITIVEN FERTIGUNG WENIGSTENS EINES BAUTEILS DEFINIERTER BAUTEILEIGENSCHAFTEN**
METHOD FOR THE ADDITIVE MANUFACTURING OF AT LEAST ONE COMPONENT OF DEFINED COMPONENT PROPERTIES
PROCÉDÉ DE PRODUCTION ADDITIVE D'AU MOINS UN COMPOSANT À PROPRIÉTÉS DE COMPOSANT DÉFINIES

(30) Priorität: 11.04.2019 DE 102019109655
(43) Veröffentlichungstag der Anmeldung: 16.02.2022
(73) Patentinhaber: Schubert Additive Solutions GmbH, 74564 Crailsheim (DE)
(72) Erfinder: SCHINDLER, Marcus, 74523 Schwäbisch Hall (DE)
(74) Vertreter: Hafner & Kohl PartmbB
(86) Internationale Anmeldenummer: PCT/EP2020/057226
(87) Internationale Veröffentlichungsnummer: WO 2020/216533

(56) Entgegenhaltungen:
- EP-A1- 3 432 178
- WO-A1-2015/020939
- WO-A1-2017/194137
- WO-A1-2018/127827
- US-A1- 2017 255 171
- US-A1- 2018 136 633
- US-A1- 2019 072 932

## Beschreibung

Die Erfindung betrifft ein Verfahren zur additiven Fertigung wenigstens eines Bauteils definierter Bauteileigenschaften.

Entsprechende Verfahren zur additiven Fertigung eines Bauteils definierter Bauteileigenschaften sind aus dem Stand der Technik in einer Vielzahl unterschiedlicher Ausführungen bekannt.

Wenngleich entsprechende Verfahren mittlerweile zur Herstellung von Bauteilen unterschiedlichster funktioneller und konstruktiver Konfiguration dem Grunde nach etabliert sind, bedarf es für die eigentliche additive Fertigung eines Bauteils definierter Bauteileigenschaften diverser Kenntnisse.

Entsprechende Kenntnisse umfassen insbesondere die Auswahl geeigneter anlagenspezifischer, bauteilspezifischer sowie prozessspezifischer Parameter, welche die additive Fertigung eines Bauteils definierter Bauteileigenschaften, d. h. insbesondere eine gewünschte Bauteilqualität, erst ermöglichen. Entsprechende Parameter müssen typischerweise für jedes additiv zu fertigende Bauteil erarbeitet werden, um gewünschte Bauteileigenschaften, d. h. insbesondere eine gewünschte Bauteilqualität, zuverlässig und reproduzierbar realisieren zu können.

Hieraus ergibt sich, dass die additive Fertigung eines Bauteils definierter Bauteileigenschaften im Einzelnen typischerweise mit erheblichem Aufwand verbunden ist, um entsprechende Parameter zu erhalten, vermittels welchen eine zuverlässige und reproduzierbare additive Fertigung eines Bauteils definierter Bauteileigenschaften erst möglich ist.

US 2019/072932 A1 offenbart ein Prinzip zur additiven Fertigung dreidimensionaler Objekte.

US 2017/255171 A1 offenbart ein Prinzip zur additiven Fertigung dreidimensionaler Objekte.

WO 2017/194137 A1 offenbart ein Prinzip zur additiven Fertigung dreidimensionaler Objekte EP 3 432 178 A1 offenbart ein Prinzip zur additiven Fertigung dreidimensionaler Objekte.

WO 2015/020939 A1 offenbart ein Prinzip zur additiven Fertigung dreidimensionaler Objekte.

WO 2018/127827 A1 offenbart ein Prinzip zur additiven Fertigung dreidimensionaler Objekte.

US 2018/0136633 A1 offenbart ein Prinzip zur additiven Fertigung dreidimensionaler Objekte.

Der Erfindung liegt hiervon ausgehend die Aufgabe zugrunde, ein Verfahren anzugeben, welches einem Nutzer eine zuverlässige und reproduzierbare additive Fertigung eines Bauteils definierter Bauteileigenschaften, insbesondere ohne eigene Erarbeitung von für die additive Fertigung des jeweiligen Bauteils definierter Bauteileigenschaften erforderlicher Parameter, ermöglicht.

Die Aufgabe wird durch die Gegenstände der unabhängigen Ansprüche gelöst. Die hierzu abhängigen Ansprüche betreffen mögliche Ausführungsformen der Gegenstände der unabhängigen Ansprüche.

Ein erster Aspekt der hierin beschriebenen Erfindung betrifft ein Verfahren zur additiven Fertigung bzw. Herstellung wenigstens eines Bauteils definierter Bauteileigenschaften gemäß dem vorliegenden Anspruch 1. Das Verfahren umfasst demnach Methoden und/oder Prozesse zur additiven Fertigung bzw. Herstellung wenigstens eines Bauteils definierter Bauteileigenschaften.

Mit dem Verfahren lassen sich grundsätzlich die unterschiedlichsten Bauteile bzw. Bauteilgruppen additiv fertigen. Insbesondere lassen sich technische Bauteile bzw. Bauteilgruppen additiv fertigen. In diesem Zusammenhang können sowohl neu konstruierte technische Bauteile bzw. Bauteilgruppen als auch Ersatz- oder Nachrüstbauteile bzw. Ersatz- oder Nachrüstbauteilgruppen einer bestimmten technischen Einrichtung, wie z. B. einer Maschine, additiv gefertigt werden. Beispiele für technische Gebiete, in welchen sich verfahrensgemäß gefertigte Bauteile bzw. Bauteilgruppen und somit auch das hierin beschriebene Verfahren einsetzen lassen, sind das Gebiet der Automatisierung, Robotik, Handling, Verpackung, etc. Mithin lassen sich verfahrensgemäß z. B. Bauteile bzw. Bauteilgruppen für Automatisierungs-, Robotik-, Handlings- und Verpackungseinrichtungen additiv fertigen. Konkret kann es sich bei solchen Bauteilen bzw. Bauteilgruppen z. B. um Handhabungselemente, wie z. B. Greifelemente, Saugelemente, etc., handeln. Jeweilige Bauteile bzw. Bauteilgruppen können mit wenigstens einer, z. B. durch innere Strukturen, wie z. B. von einem Temperiermedium durchströmbaren Temperierkanalstrukturen, von einem Strömungsmedium durchströmbaren Strömungskanalstrukturen, etc., gebildeten, zusätzlichen Funktionalität gefertigt werden.

Das Verfahren umfasst die im Folgenden näher beschriebenen Schritte:
In einem ersten Schritt des Verfahrens erfolgt ein Bereitstellen wenigstens eines zertifizierten Datensatzes, welcher von einem Bereitsteller für einen additiven Fertigungsprozess wenigstens eines bestimmten Bauteils definierter Bauteileigenschaften zertifizierte anlagenspezifische Parameter und/oder bauteilspezifische Parameter und/oder prozessspezifische Parameter beinhaltet. In dem ersten Schritt des Verfahrens wird von einem Bereitsteller sonach wenigstens ein zertifizierter Datensatz bereitgestellt, welcher zertifizierte anlagenspezifische Parameter und/oder bauteilspezifische Parameter und/oder prozessspezifische Parameter für einen additiven Fertigungsprozess wenigstens eines Bauteils definierter Bauteileigenschaften beinhaltet. Der erste Schritt wird typischerweise von einem Bereitsteller durchgeführt.

Der wenigstens eine zertifizierte Datensatz beinhaltet typischerweise sämtliche erforderlichen anlagenspezifischen Parameter und/oder bauteilspezifischen Parameter und/oder prozessspezifischen Parameter, welche für die additive Fertigung eines bestimmten Bauteils definierter Bauteileigenschaften erforderlich sind. Mit anderen Worten liegen in dem wenigstens einen zertifizierten Datensatz sämtliche anlagenspezifischen und/oder bauteilspezifischen und/oder prozessspezifischen Informationen zur additiven Fertigung eines jeweiligen bestimmten Bauteils definierter Bauteileigenschaften, d. h. insbesondere auch maschinenlesbare Steuerinformationen zur Steuerung bzw. Regelung des Betriebs einer zur Durchführung eines additiven Fertigungsprozesses zur additiven Fertigung eines jeweiligen Bauteils definierter Bauteileigenschaften verwendeten additiven Fertigungseinrichtung, vor.

Mithin kann für jedwedes verfahrensgemäß zu fertigende bzw. gefertigte Bauteil ein eigener zertifizierter Datensatz bereitgestellt werden. Dies insbesondere deshalb, als zur Realisierung bestimmter Bauteileigenschaften bestimmte anlagenspezifische Parameter und/oder bauteilspezifische Parameter und/oder prozessspezifische Parameter erforderlich sind, mithin bestimmte Bauteileigenschaften mit bestimmten anlagenspezifischen Parametern und/oder bauteilspezifischen Parametern und/oder prozessspezifischen Parametern korreliert sein können, sodass nur eine bestimmte Kombination von anlagenspezifischen Parametern und/oder bauteilspezifischen Parametern und/oder prozessspezifischen Parametern eine zuverlässige und reproduzierbare additive Fertigung eines Bauteils definierter Bauteileigenschaften ermöglicht. Hieraus ergibt sich, dass der wenigstens eine zertifizierte Datensatz typischerweise eine bestimmte Kombination von anlagenspezifischen Parametern und/oder bauteilspezifischen Parametern und/oder prozessspezifischen Parametern zur Herstellung eines bestimmten Bauteils definierter Bauteileigenschaften beinhaltet.

Eine in dem wenigstens einen zertifizierten Datensatz enthaltene bestimmte Kombination entsprechender Parameter bezieht sich dabei typischerweise auf einen mit einer bestimmten additiven Fertigungseinrichtung durchführbaren bestimmten additiven Fertigungsprozess eines bestimmten Bauteils definierter Bauteileigenschaften. Der wenigstens eine zertifizierte Datensatz beinhaltet demnach typischerweise eine für einen bestimmten, mit einer bestimmten additiven Fertigungseinrichtung durchführbaren additiven Fertigungsprozess maßgeschneiderte Kombination an anlagenspezifischen Parametern und/oder bauteilspezifischen Parametern und/oder prozessspezifischen Parametern, welche Kombination eine zuverlässige und reproduzierbare additive Fertigung eines Bauteils definierter Bauteileigenschaften ermöglicht. Mithin können sich zertifizierte Datensätze zur Fertigung von Bauteilen derselben definierten Bauteileigenschaften dennoch in wenigstens einem anlagenspezifischen Parameter und/oder bauteilspezifischen Parameter und/oder prozessspezifischen Parameter unterscheiden, sofern diese unterschiedlichen additiven Fertigungsprozessen und/oder dem Betrieb unterschiedlicher additiver Fertigungseinrichtungen zugrunde gelegt werden.

Im Rahmen der Durchführung des Verfahrens stellt ein Nutzer des Verfahrens, welcher eine additive Fertigung eines Bauteils definierter Bauteileigenschaften vornehmen möchte, den wenigstens einen ihm durch einen Bereitsteller bereitgestellten zertifizierten Datensatz einer zur Durchführung eines additiven Fertigungsprozesses zur additiven Fertigung des jeweiligen Bauteils definierter Bauteileigenschaften verwendeten additiven Fertigungseinrichtung zur Verfügung, woraufhin der additive Fertigungsprozess zur Fertigung des jeweiligen Bauteils definierter Bauteileigenschaften ohne nutzerseitigen Eingriff, insbesondere vollautomatisch, allein auf Grundlage des wenigstens einen zertifizierten Datensatzes durchgeführt wird. Das Anwenden wenigstens eines additiven Fertigungsprozesses zur additiven Fertigung wenigstens eines bestimmten Bauteils definierter Bauteileigenschaften auf Grundlage des wenigstens einen zertifizierten Datensatzes vermittels einer nutzerseitigen additiven Fertigungseinrichtung kann sonach vollautomatisiert, insbesondere ohne einen nutzerseitigen Eingriff, erfolgen.

Der wenigstens eine zertifizierte Datensatz beinhaltet, wie bereits angedeutet, auch maschinenlesbare Steuerinformation zur, insbesondere vollautomatischen, Steuerung bzw. Regelung des Betriebs wenigstens einer additiven Fertigungseinrichtung zur additiven Fertigung des wenigstens einen additiv zu fertigenden Bauteils auf Grundlage des wenigstens einen zertifizierten Datensatzes. Bei entsprechenden Steuerinformationen handelt es sich um einen jeweiligen Maschinencode (G-Code) einer jeweiligen additiven Fertigungseinrichtung handeln. Entsprechende Steuerinformationen können unmittelbar oder mittelbar durch entsprechende in dem wenigstens einen zertifizierten Datensatz enthaltene anlagenspezifische Parameter und/oder bauteilspezifische Parameter und/oder prozessspezifische Parameter beschrieben werden.

Zur additiven Fertigung eines Bauteils definierter Bauteileigenschaften benötigt ein Nutzer demnach nur eine additive Fertigungseinrichtung, regelmäßig auch als "3D-Drucker" bezeichnet, und einen entsprechenden zertifizierten Datensatz, welcher der additiven Fertigungseinrichtung, d. h. typischerweise einer den Betrieb der additiven Fertigungseinrichtung steuernden bzw. regelnden hardware- und/oder software-mäßig implementierten Steuereinrichtung, datenmäßig zur Verfügung wird.

Ein Nutzer des Verfahrens muss - wie sich auch im Weiteren ergibt - sonach insbesondere keine Erarbeitung entsprechender Parameter vornehmen, welche ihm eine zuverlässige und reproduzierbare additive Fertigung eines jeweiligen Bauteils definierter Bauteileigenschaften ermöglichen, da sämtliche Parameter bereits in dem wenigstens einen dem additiven Fertigungsprozess zugrunde zulegenden zertifizierten Datensatz enthalten sind. Ein Nutzer des Verfahrens benötigt ferner keine eigenen Erfahrungen oder Kenntnisse im Bereich der additiven Fertigung, da sämtliches "Wissen" über die nutzerseitig angestrebte additive Fertigung eines jeweiligen Bauteils definierter Bauteileigenschaften in dem wenigstens einen zertifizierten Datensatz enthalten ist.

Dem ersten Schritt geht typischerweise voraus, dass ein Bereitsteller entsprechende zertifizierte anlagenspezifische Parameter und/oder bauteilspezifische Parameter und/oder prozessspezifische Parameter für einen additiven Fertigungsprozess definiert und datenmäßig in einem entsprechenden zertifizierten Datensatz zusammenfasst bzw. zusammengefasst hat. Mithin kann auch das Definieren entsprechender anlagenspezifischer Parameter und/oder bauteilspezifischer Parameter und/oder prozessspezifischer Parameter und das Zusammenfassen dieser in einem entsprechenden zertifizierten Datensatz einen Schritt des Verfahrens darstellen.

In einem zweiten Schritt des Verfahrens erfolgt ein Anwenden wenigstens eines additiven Fertigungsprozesses zur additiven Fertigung wenigstens eines bestimmten Bauteils definierter Bauteileigenschaften auf Grundlage des wenigstens einen in dem ersten Schritt bereitgestellten zertifizierten Datensatzes. Der zweite Schritt wird typischerweise durch einen Nutzer des Verfahrens durchgeführt.

In dem zweiten Schritt können grundsätzlich sämtliche additiven Fertigungsprozesse, d. h. insbesondere sämtliche pulver(bett)basierten additiven Fertigungsprozesse sowie sämtliche nicht pulver(bett)basierten additiven Fertigungsprozesse, angewendet werden. Ein in dem zweiten Schritt konkret angewendeter additiver Fertigungsprozess ist insbesondere durch die in dem jeweilig eingesetzten zertifizierten Datensatz enthaltenen anlagenspezifischen Parameter und/oder prozessspezifischen Parameter definiert.

In dem zweiten Schritt können, je nach konkret angewendetem additiven Fertigungsprozess, grundsätzlich verschiedene Baumaterialien, d. h. z. B. Metalle, Kunststoffe, etc., verarbeitet werden. Entsprechend kann in dem zweiten Schritt z. B. ein additiver Fertigungsprozess angewendet werden, in welchem ein auf Metall oder Kunststoff basierendes Baumaterial zur additiven Fertigung des wenigstens einen Bauteils verarbeitet bzw. verwendet wird. Insbesondere kann in dem zweiten Schritt ein Fused-Deposition-Modelling ("FDM")-Prozess angewendet werden, in welchem ein auf Kunststoff basierendes Baumaterial zur additiven Fertigung des wenigstens einen Bauteils verwendet wird. FDM-Prozesse zeichnen sich durch eine vergleichsweise hohe Baurate bei gleichzeitig sehr guten Bauteileigenschaften aus. Das Verfahren lässt sich jedoch auch mit anderen additiven Fertigungsprozessen, wie z. B. Binder-Jetting-Prozessen, Digital-Light-Synthesis-Prozessen, CLIP-Prozessen, SLM-Prozessen, SLS-Prozessen, SEBM-Prozessen, Stereolithographie-Prozessen, etc., realisieren.

Insgesamt liegt ein Verfahren vor, welches einem Nutzer eine zuverlässige und reproduzierbare additive Fertigung eines Bauteils definierter Bauteileigenschaften, insbesondere ohne eigene Erarbeitung von für die additive Fertigung des jeweiligen Bauteils definierter Bauteileigenschaften erforderlicher Parameter, ermöglicht. Das Verfahren legt damit zugleich den Grundstein für eine neue Art der additiven Fertigung On-Demand.

Das Verfahren kann auch das Bereitstellen eines zertifizierten Datensatzes, welcher von einem Bereitsteller für die Vorbereitung eines additiven Fertigungsprozesses des oder wenigstens eines bestimmten Bauteils definierter Bauteileigenschaften zertifizierte anlagenspezifische Parameter und/oder bauteilspezifische Parameter und/oder prozessspezifische Parameter beinhaltet, sowie das Anwenden wenigstens einer Maßnahme zur Vorbereitung des oder wenigstens eines additiven Fertigungsprozesses zur additiven Fertigung wenigstens eines bestimmten Bauteils definierter Bauteileigenschaften auf Grundlage des wenigstens einen zertifizierten Datensatzes beinhaltet, umfassen. Ein Nutzer benötigt sonach (auch) keine eigenen Kenntnisse über eine entsprechende vorbereitende Maßnahme, als sämtliches hierzu erforderliches "Wissen" in dem wenigstens einen zertifizierten Datensatz enthalten sein kann.

Die wenigstens eine Maßnahme zur Vorbereitung des auf Grundlage des wenigstens einen zertifizierten Datensatzes angewendeten additiven Fertigungsprozesses kann z. B. eine Maßnahme zur Vorbereitung eines im Rahmen des zur additiven Fertigung eines Bauteils bestimmter Bauteileigenschaften durchgeführten additiven Fertigungsprozesses zu verwendenden Baumaterials, insbesondere eine Temperierung, Trocknung, Inertisierung, etc. des Baumaterials, umfassen. Die Maßnahme ist typischerweise im Hinblick auf einen konkret anzuwendenden additiven Fertigungsprozess bzw. ein im Rahmen der Durchführung eines konkret anzuwendenden additiven Fertigungsprozesses konkret eingesetzten Baumaterials gewählt. Beispielsweise können z. B. pulver(bett)basierte additive Fertigungsprozesse andere vorbereitende Maßnahmen erfordern, als nicht pulver(bett)basierte additive Fertigungsprozesse.

Das Verfahren kann auch das Bereitstellen eines zertifizierten Datensatzes, welcher von einem Bereitsteller für die Nachbereitung des oder wenigstens eines additiven Fertigungsprozesses wenigstens eines bestimmten Bauteils definierter Bauteileigenschaften zertifizierte anlagenspezifische Parameter und/oder bauteilspezifische Parameter und/oder prozessspezifische Parameter beinhaltet, sowie das Anwenden wenigstens einer Maßnahme zur Nachbereitung des oder wenigstens eines additiven Fertigungsprozesses zur additiven Fertigung wenigstens eines bestimmten Bauteils definierter Bauteileigenschaften auf Grundlage des zertifizierten Datensatzes, umfassen. Ein Nutzer benötigt sonach (auch) keine eigenen Kenntnisse über eine entsprechende nachbereitende Maßnahme, als sämtliches hierzu erforderliches "Wissen" in dem wenigstens einen zertifizierten Datensatz enthalten sein kann.

Die wenigstens eine Maßnahme zur Nachbereitung des additiven Fertigungsprozesses kann eine Maßnahme zur Nachbearbeitung des im Rahmen des auf Grundlage des wenigstens einen zertifizierten Datensatzes angewendeten additiven Fertigungsprozesses additiv gefertigten Bauteils, insbesondere eine mechanische und/oder thermische Nachbehandlung des additiv gefertigten Bauteils, wie z. B. eine zumindest abschnittsweise mechanische Oberflächenbearbeitung zur Erzeugung bestimmter Oberflächeneigenschaften, eine zumindest abschnittsweise thermische Behandlung zur Erzeugung bestimmter struktureller Eigenschaften, etc., umfassen. Die Maßnahme ist typischerweise im Hinblick auf einen konkret angewendeten additiven Fertigungsprozess bzw. ein im Rahmen der Durchführung eines konkret angewendeten additiven Fertigungsprozesses konkret eingesetzten Baumaterials gewählt. Beispielsweise können z. B. vermittels pulver(bett)basierten additiven Fertigungsprozessen gefertigte Bauteile andere nachbereitende Maßnahmen erfordern, als nicht vermittels pulver(bett)basierten additiven Fertigungsprozessen gefertigte Bauteile. Gleichermaßen können z. B. aus Metall gefertigte Bauteile andere nachbereitende Maßnahmen erfordern, als aus Kunststoff gefertigte Bauteile.

Es ist ebenso denkbar, dass ein zertifizierter Datensatz 4, 4', 4" sowohl von einem Bereitsteller für einen additiven Fertigungsprozess wenigstens eines bestimmten Bauteils definierter Bauteileigenschaften zertifizierte anlagenspezifische Parameter und/oder bauteilspezifische Parameter und/oder prozessspezifische Parameter als auch von einem Bereitsteller für die Vorbereitung und/oder Nachbereitung eines additiven Fertigungsprozesses des oder wenigstens eines bestimmten Bauteils definierter Bauteileigenschaften zertifizierte anlagenspezifische Parameter und/oder bauteilspezifische Parameter und/oder prozessspezifische Parameter beinhaltet.

Nachfolgend werden in nicht abschließender Aufzählung Beispiele für, insbesondere bereitstellerseitig, zertifizierbare bzw. zertifizierte bauteilspezifische Parameter gegeben, welche in dem wenigstens einen zertifizierten Datensatz enthalten sein können.

Der wenigstens eine zertifizierte Datensatz kann als bauteilspezifischen Parameter z. B. wenigstens einen geometrisch-konstruktiven Parameter des wenigstens einen additiv zu fertigenden Bauteils, insbesondere alle geometrisch-konstruktiven Parameter des wenigstens einen additiv zu fertigenden Bauteils, beinhalten. Der wenigstens eine zertifizierte Datensatz kann sonach einen oder mehrere, insbesondere sämtlichen, geometrisch-konstruktiven Parameter, d. h. z. B. Abmessungen, Form, Volumen, etc., des wenigstens einen additiv zu fertigenden Bauteils beinhalten. Die geometrisch-konstruktiven Eigenschaften des wenigstens einen additiv zu fertigenden Bauteils und die sich hieraus ergebende konstruktive wie auch funktionelle Gestaltung des wenigstens einen additiv zu fertigenden Bauteils können sonach durch den wenigstens einen zertifizierten Datensatz, insbesondere vollständig, definiert sein bzw. werden.

Der wenigstens eine zertifizierte Datensatz kann als bauteilspezifischen Parameter alternativ oder ergänzend wenigstens einen chemischen Parameter des wenigstens einen additiv zu fertigenden Bauteils, insbesondere alle chemischen Parameter des wenigstens einen additiv zu fertigenden Bauteils, beinhalten. Der wenigstens eine zertifizierte Datensatz kann sonach einen oder mehrere, insbesondere sämtlichen, chemischen Parameter, d. h. z. B. chemische Alterung, insbesondere in bestimmten chemischen Umgebungen, chemische Reaktivität, insbesondere in bestimmten chemischen Umgebungen, chemische Verträglichkeit mit bestimmten Medien, chemische Zusammensetzung, etc., des wenigstens einen additiv zu fertigenden Bauteils beinhalten. Die chemischen Eigenschaften des wenigstens einen additiv zu fertigenden Bauteils können sonach durch den wenigstens einen zertifizierten Datensatz, insbesondere vollständig, definiert sein bzw. werden.

Der wenigstens eine zertifizierte Datensatz kann als bauteilspezifischen Parameter alternativ oder ergänzend wenigstens einen physikalischen Parameter des wenigstens einen additiv zu fertigenden Bauteils, insbesondere alle physikalischen Parameter des wenigstens einen additiv zu fertigenden Bauteils, beinhalten. Der wenigstens eine zertifizierte Datensatz kann sonach einen oder mehrere, insbesondere sämtlichen, physikalischen Parameter, d. h. z. B. elektrische Parameter, wie z. B. elektrische Leitfähigkeit, mechanische Parameter, wie z. B. Festigkeit, Härte, Duktilität, etc., thermische Parameter, wie z. B. Wärmeleitfähigkeit, Wärmekapazität, etc., tribologische Parameter, wie z. B. Rauigkeit, sowie sonstige physikalischen Parameter, wie z. B. Dichte, Masse, etc., des wenigstens einen additiv zu fertigenden Bauteils beinhalten. Die physikalischen Eigenschaften des wenigstens einen additiv zu fertigenden Bauteils können sonach durch den wenigstens einen zertifizierten Datensatz, insbesondere vollständig, definiert sein bzw. werden.

Nachfolgend werden in nicht abschließender Aufzählung Beispiele für, insbesondere bereitstellerseitig, zertifizierbare bzw. zertifizierte anlagenspezifische Parameter gegeben, welche in dem wenigstens einen zertifizierten Datensatz enthalten sein können.

Der wenigstens eine zertifizierte Datensatz kann als anlagenspezifischen Parameter z. B. wenigstens einen Abmessungsparameter, wie z. B. Länge, Breite, Form, etc., wenigstens eines Baufelds bzw. einer Bauebene wenigstens einer zur additiven Fertigung des wenigstens einen additiv zu fertigenden Bauteils zu verwendenden oder verwendeten additiven Fertigungseinrichtung, insbesondere alle Abmessungsparameter wenigstens eines Baufelds wenigstens einer zur additiven Fertigung des wenigstens einen additiv zu fertigenden Bauteils zu verwendenden oder verwendeten additiven Fertigungseinrichtung, beinhalten. Die Abmessungen wenigstens eines Baufelds bzw. einer Bauebene wenigstens einer zur additiven Fertigung des wenigstens einen additiv zu fertigenden Bauteils zu verwendenden oder verwendeten additiven Fertigungseinrichtung können sonach durch den wenigstens einen zertifizierten Datensatz, insbesondere vollständig, definiert sein bzw. werden.

Der wenigstens eine zertifizierte Datensatz kann als anlagenspezifischen Parameter alternativ oder ergänzend wenigstens einen Abmessungsparameter, wie z. B. Länge, Breite, Höhe bzw. Tiefe, Raumform, wenigstens eines Bauvolumens wenigstens einer zur additiven Fertigung des wenigstens einen additiv zu fertigenden Bauteils zu verwendenden oder verwendeten additiven Fertigungseinrichtung, insbesondere alle Abmessungsparameter wenigstens eines Bauvolumens wenigstens einer zur additiven Fertigung des wenigstens einen additiv zu fertigenden Bauteils zu verwendenden oder verwendeten additiven Fertigungseinrichtung, beinhalten. Die Abmessungen wenigstens eines Bauvolumens wenigstens einer zur additiven Fertigung des wenigstens einen additiv zu fertigenden Bauteils zu verwendenden oder verwendeten additiven Fertigungseinrichtung können sonach durch den wenigstens einen zertifizierten Datensatz, insbesondere vollständig, definiert sein bzw. werden.

Der wenigstens eine zertifizierte Datensatz kann als anlagenspezifischen Parameter alternativ oder ergänzend wenigstens einen Fertigungsparameter, wie z. B. einen die Baurate beeinflussenden Bauratenparameter, einen einen Materialvorschubvorgang eines in einem Baufeld bzw. Bauvolumen selektiv anzuordnenden, insbesondere strangartigen bzw. - förmigen, Baumaterials beeinflussenden Vorschubparameter, einen einen Aufbring- bzw. Beschichtungsvorgang eines in einem Baufeld aufzubringenden, insbesondere pulverartigen bzw. -förmigen, Baumaterials beeinflussenden Aufbring- bzw. Beschichtungsparameter, einen einen Belichtungs- bzw. Bestrahlungsvorgang eines in einem Baufeld aufgebrachten, zu belichtenden bzw. zu bestrahlenden Baumaterials vermittels wenigstens eines Energiestrahls - wie z. B. eines Elektronen- oder Laserstrahls -, insbesondere zum Zwecke der selektiven Verfestigung und/oder zum Zwecke der selektiven Temperierung des Baumaterials, beeinflussenden Belichtungs- bzw. Bestrahlungsparameter, d. h. z. B. Energiestrahlanzahl, Energiestrahlintensität bzw. -leistung, Energiestrahlfokusgröße, Energiestrahlfokusposition, etc., wenigstens einer zur additiven Fertigung des wenigstens einen additiv zu fertigenden Bauteils zu verwendenden oder verwendeten additiven Fertigungseinrichtung, insbesondere alle Fertigungsparameter wenigstens einer zur additiven Fertigung des wenigstens einen additiv zu fertigenden Bauteils zu verwendenden oder verwendeten additiven Fertigungseinrichtung, beinhalten. Die Fertigungsparameter wenigstens einer zur additiven Fertigung des wenigstens einen additiv zu fertigenden Bauteils zu verwendenden oder verwendeten additiven Fertigungseinrichtung können sonach durch den wenigstens einen zertifizierten Datensatz, insbesondere vollständig, definiert sein bzw. werden.

Der wenigstens eine zertifizierte Datensatz kann als anlagenspezifischen Parameter alternativ oder ergänzend wenigstens einen Anlagentypparameter, insbesondere einen Baureihen-, Modell-, Typ- und/oder Herstellerparameter, wenigstens einer zur additiven Fertigung des wenigstens einen additiv zu fertigenden Bauteils zu verwendenden oder verwendeten additiven Fertigungseinrichtung, insbesondere alle Anlagentypparameter wenigstens einer zur additiven Fertigung des wenigstens einen additiv zu fertigenden Bauteils zu verwendenden oder verwendeten additiven Fertigungseinrichtung, beinhalten. Die Anlagentypparameter wenigstens einer zur additiven Fertigung des wenigstens einen additiv zu fertigenden Bauteils zu verwendenden oder verwendeten additiven Fertigungseinrichtung können sonach durch den wenigstens einen zertifizierten Datensatz, insbesondere vollständig, definiert sein bzw. werden.

Nachfolgend werden in nicht abschließender Aufzählung Beispiele für, insbesondere bereitstellerseitig, zertifizierbare bzw. zertifizierte prozessspezifische Parameter gegeben, welche in dem wenigstens einen zertifizierten Datensatz enthalten sein können.

Der wenigstens eine zertifizierte Datensatz kann als prozessspezifischen Parameter wenigstens einen Baumaterialparameter, insbesondere die chemische und/oder physikalische Zusammensetzung eines Baumaterials, die Pulvergrößenverteilung und/oder Pulvermorphologie eines Baumaterialpulvers, sofern ein pulverartiges bzw. -förmiges Baumaterial eingesetzt wird, Abmessungen bzw. Querschnittsgeometrie eines Baumaterialstrangs, sofern ein strangartig bzw. -förmiges Baumaterial eingesetzt wird, die Viskosität eines flüssigen Baumaterials, sofern ein flüssiges Baumaterial eingesetzt wird, den Reinheitsgrad bzw. Rezyklierungsanteil eines Baumaterials, das Mischungsverhältnis eines Baumaterials, sofern ein mehrere unterschiedliche Baumaterialkomponenten umfassendes Baumaterial eingesetzt wird, etc., wenigstens eines Baumaterials, welches von wenigstens einer zur additiven Fertigung des wenigstens einen additiv zu fertigenden Bauteils zu verwendenden oder verwendeten additiven Fertigungseinrichtung zur additiven Fertigung einsetzbar ist bzw. eingesetzt wird, insbesondere alle Baumaterialparameter wenigstens eines Baumaterials, welches von wenigstens einer zur additiven Fertigung des wenigstens einen additiv zu fertigenden Bauteils zu verwendenden oder verwendeten additiven Fertigungseinrichtung zur additiven Fertigung einsetzbar ist, beinhalten. Die Baumaterialparameter wenigstens eines zur additiven Fertigung des wenigstens einen additiv zu fertigenden Bauteils zu verwendenden oder verwendeten Baumaterials können sonach durch den wenigstens einen zertifizierten Datensatz, insbesondere vollständig, definiert sein bzw. werden.

Der wenigstens eine zertifizierte Datensatz kann als prozessspezifischen Parameter alternativ oder ergänzend wenigstens einen chemischen Prozessparameter, insbesondere eine chemische Atmosphäre, wie z. B. eine inerte Atmosphäre, innerhalb wenigstens eines Bau- und/oder Prozessraums bzw. -volumens wenigstens einer zur additiven Fertigung des wenigstens einen additiv zu fertigenden Bauteils zu verwendenden oder verwendeten additiven Fertigungseinrichtung, insbesondere alle chemischen Prozessparameter wenigstens eines Bau- und/oder Prozessraums bzw. -volumens wenigstens einer zur additiven Fertigung des wenigstens einen additiv zu fertigenden Bauteils zu verwendenden oder verwendeten additiven Fertigungseinrichtung, beinhalten. Die chemischen Prozessparameter innerhalb wenigstens eines Bau- und/oder Prozessraums bzw. -volumens wenigstens einer zur additiven Fertigung des wenigstens einen additiv zu fertigenden Bauteils zu verwendenden oder verwendeten additiven Fertigungseinrichtung können sonach durch den wenigstens einen zertifizierten Datensatz, insbesondere vollständig, definiert sein bzw. werden.

Der wenigstens eine zertifizierte Datensatz kann als prozessspezifischen Parameter alternativ oder ergänzend wenigstens einen physikalischen Prozessparameter, insbesondere Feuchtigkeit, Druck, Temperatur, etc., außerhalb und/oder innerhalb wenigstens eines Bau- und/oder Prozessraums bzw. -volumens wenigstens einer zur additiven Fertigung des wenigstens einen additiv zu fertigenden Bauteils zu verwendenden oder verwendeten additiven Fertigungseinrichtung, insbesondere alle physikalischen Prozessparameter wenigstens eines Bau- und/oder Prozessraums wenigstens einer zur additiven Fertigung des wenigstens einen additiv zu fertigenden Bauteils zu verwendenden oder verwendeten additiven Fertigungseinrichtung, beinhalten. Die physikalischen Prozessparameter außerhalb und/oder innerhalb wenigstens eines Bau- und/oder Prozessraums bzw. -volumens wenigstens einer zur additiven Fertigung des wenigstens einen additiv zu fertigenden Bauteils zu verwendenden oder verwendeten additiven Fertigungseinrichtung können sonach durch den wenigstens einen zertifizierten Datensatz, insbesondere vollständig, definiert sein bzw. werden.

Der wenigstens eine zertifizierte Datensatz kann als prozessspezifischen Parameter alternativ oder ergänzend wenigstens einen klimatischen Prozessparameter, insbesondere Feuchtigkeit, Druck, Temperatur, außerhalb und/oder innerhalb wenigstens einer Umgebung wenigstens einer zur additiven Fertigung des wenigstens einen additiv zu fertigenden Bauteils zu verwendenden oder verwendeten additiven Fertigungseinrichtung, insbesondere alle klimatischen Prozessparameter wenigstens einer zur additiven Fertigung des wenigstens einen additiv zu fertigenden Bauteils zu verwendenden oder verwendeten additiven Fertigungseinrichtung, beinhalten. Die klimatischen Prozessparameter innerhalb wenigstens einer Umgebung wenigstens einer zur additiven Fertigung des wenigstens einen additiv zu fertigenden Bauteils zu verwendenden oder verwendeten additiven Fertigungseinrichtung können sonach durch den wenigstens einen zertifizierten Datensatz, insbesondere vollständig, definiert sein bzw. werden.

Der wenigstens eine zertifizierte Datensatz kann als prozessspezifischen Parameter alternativ oder ergänzend wenigstens einen eine Aufteilung des wenigstens einen additiv zu fertigenden Bauteils in einzelne, jeweils einen Querschnitt des wenigstens einen additiv zu fertigenden Bauteils beinhaltende Schichten beschreibenden Schichtparameter (Slice-Parameter), wie z. B. Schichtanzahl, Schichtdicke, Schichtfläche, etc., insbesondere alle eine Aufteilung des wenigstens einen additiv zu fertigenden Bauteils in einzelne, jeweils einen Querschnitt des wenigstens einen additiv zu fertigenden Bauteils beinhaltenden Schichten beschreibende Schichtparameter, beinhalten. Die Schichtparameter (Slice-Parameter) können sonach durch den wenigstens einen zertifizierten Datensatz, insbesondere vollständig, definiert sein bzw. werden.

Der wenigstens eine zertifizierte Datensatz kann als prozessspezifischen Parameter alternativ oder ergänzend wenigstens einen Parameter, insbesondere einen geometrisch-konstruktiven Parameter und/oder einen Anordnungs- und/oder Ausrichtungsparameter relativ zu einem zu stützenden additiv zu fertigenden oder gefertigten Bauteil, wenigstens eines zur Unterstützung des wenigstens einen additiv zu fertigenden oder gefertigten Bauteils dienenden Stützelements (Supportelements), insbesondere alle Parameter wenigstens eines zur Unterstützung des wenigstens einen additiv zu fertigenden oder gefertigten Bauteils dienenden Stützelements, beinhalten. Die Parameter wenigstens eines zur Unterstützung des wenigstens einen additiv zu fertigenden oder gefertigten Bauteils dienenden Stützelements (Supportelements) können sonach durch den wenigstens einen zertifizierten Datensatz, insbesondere vollständig, definiert sein bzw. werden.

Der wenigstens eine zertifizierte Datensatz kann als prozessspezifischen Parameter alternativ oder ergänzend wenigstens einen eine Baustrategie, d. h. insbesondere eine Baumaterialaufbringstrategie, eine Belichtungs- oder Bestrahlungsstrategie, etc., des wenigstens einen additiv zu fertigenden Bauteils beschreibenden Baustrategieparameter, insbesondere alle eine Baustrategie des wenigstens einen additiv zu fertigenden Bauteils beschreibenden Baustrategieparameter, beinhalten. Die Baustrategieparameter des wenigstens einen additiv zu fertigenden Bauteils beschreibenden Baustrategieparameter können sonach durch den wenigstens einen zertifizierten Datensatz, insbesondere vollständig, definiert sein bzw. werden.

Der wenigstens eine zertifizierte Datensatz kann, wie erwähnt, wenigstens einen, insbesondere alle, geometrisch-konstruktiven Parameter wenigstens eines zur Unterstützung des wenigstens einen additiv zu fertigenden oder gefertigten Bauteils dienenden Stützelements (Supportelements) als prozessspezifischen Parameter beinhalten. Dabei kann das wenigstens eine Stützelement mit wenigstens einem ein Entfernen des wenigstens einen Stützelements von dem additiv gefertigten Bauteil erleichternden Strukturelement, insbesondere einer, z. B. durch eine Sollbruchstelle realisierten, Schwächung des wenigstens einen Stützelements, und/oder mit einer das zu entfernende Stützelement, z. B. farblich, von dem additiv gefertigten Bauteil abhebenden, optisch hervorhebenden Kennzeichnung, versehen sein bzw. werden. In dem wenigstens einen zertifizierten Datensatz können sonach im Zusammenhang mit entsprechenden auszubildenden Strukturelementen auch Informationen enthalten sein, welche die spätere Handhabung, d. h. insbesondere die Entfernung von Stützelementen, eines auf Grundlage des wenigstens einen zertifizierten Datensatzes additiv gefertigten Bauteils betreffen, als diese das, insbesondere additive, Ausbilden entsprechender Strukturelemente beinhalten.

In einer Ausführungsform kann ein Vergleichen wenigstens eines im Rahmen der additiven Fertigung des wenigstens einen additiv zu fertigenden Bauteils definierter Bauteileigenschaften vermittels einer, z. B. optischen, Erfassungseinrichtung erfassten, die additive Fertigung des wenigstens einen additiv zu fertigenden Bauteils betreffenden Parameters mit wenigstens einem, insbesondere korrespondierenden, Referenzparameter, bei welchem es sich insbesondere um einen durch den wenigstens einen zertifizierten Datensatz beschriebenen anlagenspezifischen Parameter und/oder bauteilspezifischen Parameter und/oder prozessspezifischen Parameter handelt, erfolgen. Mithin kann ein aktuell durchgeführter additiver Fertigungsprozess, insbesondere in Echtzeit, gegen einen durch den wenigstens einen zertifizierten Datensatz beschriebenen additiven Fertigungsprozess geprüft werden. Derart kann eine Überwachung eines auf Grundlage des wenigstens einen zertifizierten Datensatzes erfolgenden additiven Fertigungsprozesses realisiert werden.

In dieser Ausführungsform kann ferner ein Auswerten der Vergleichsinformation im Hinblick auf wenigstens ein Auswertekriterium, insbesondere dahin, ob dieses eine Über- oder Unterschreitung wenigstens eines parameterspezifischen Grenzwerts oder Grenzwertbereichs anzeigt, und ein Erzeugen einer das jeweilige Auswerteergebnis beschreibenden Auswerteinformation erfolgen. Die Auswerteinformation kann insbesondere angeben, ob bzw. inwieweit das additiv gefertigte Bauteil wenigstens einem, insbesondere durch den wenigstens einen Grenzwert oder Grenzwertbereich definierten, Auswertekriterium genügt oder nicht genügt. Das Ausgeben kann über ein Ausgaben einer entsprechenden Auswerteinformation an einer, insbesondere akustischen und/oder optischen und/oder haptischen, Ausgabeeinrichtung, d. h. z. B. einem Display, und/oder über ein datenmäßiges Übertragen einer entsprechenden Auswerteinformation an wenigstens einen Kommunikationspartner erfolgen.

In einer Ausführungsform kann der wenigstens eine zertifizierte Datensatz bereitstellerseitig erzeugt werden bzw. worden sein. Dabei kann der wenigstens eine zertifizierte Datensatz seitens des Bereitstellers z. B. auf Grundlage von Informationen des Bereitstellers, insbesondere auf Grundlage von seitens des Bereitstellers, bevorzugt unter definierten Fertigungsbedingungen, gegebenenfalls empirisch bzw. iterativ gewonnenen, Fertigungsergebnissen eines dem additiv zu fertigenden Bauteil entsprechenden Referenzbauteils, erzeugt werden oder worden sein. Der wenigstens eine zertifizierte Datensatz kann sonach auf der additiven Fertigung eines Referenzbauteils mit definierten Bauteileigenschaften, welche (exakt) den Bauteileigenschaften eines verfahrensgemäß zu fertigenden Bauteils entsprechen, basieren. Mithin können diejenigen anlagenspezifischen Parameter und/oder bauteilspezifischen Parameter und/oder prozessspezifischen Parameter, auf Grundlage welcher ein bestimmtes Referenzbauteil definierter Bauteileigenschaften zuverlässig und reproduzierbar gefertigt wurde, d. h. insbesondere alle anlagenspezifischen Parameter und/oder bauteilspezifischen Parameter und/oder prozessspezifischen Parameter, auf Grundlage welcher ein bestimmtes Referenzbauteil definierter Bauteileigenschaften zuverlässig und reproduzierbar gefertigt wurde, als zertifizierter Datensatz für die additive Fertigung eines dem Referenzbauteil (exakt) entsprechenden additiv zu fertigenden Bauteils verwendet werden bzw. in dem wenigstens einen zertifizierten Datensatz enthalten sein. Mit anderen Worten können die in dem wenigstens einen zertifizierten Datensatz enthaltenen anlagenspezifischen Parameter und/oder bauteilspezifischen Parameter und/oder prozessspezifischen Parameter als im Rahmen der additiven Fertigung eines bestimmten Referenzbauteils definierter Bauteileigenschaften unter bestimmten - typischerweise ebenso durch den zertifizierten Datensatz abgebildeten - anlagenspezifischen und/oder bauteilspezifischen und/oder prozessspezifischen Gegebenheiten erprobte Parameter erachtet werden. Hieraus ergibt sich der bereits erwähnte Aspekt, dass ein Nutzer des Verfahrens keine eigene Erarbeitung entsprechender Parameter vornehmen muss, welche ihm eine zuverlässige und reproduzierbare additive Fertigung eines jeweiligen Bauteils definierter Bauteileigenschaften ermöglichen, da sämtliche Parameter bereits in dem dem additiven Fertigungsprozess zugrunde zulegenden wenigstens einen zertifizierten Datensatz enthalten sind.

In einer weiteren Ausführungsform kann der wenigstens eine zertifizierte Datensatz jedoch ursprünglich auch durch einen Nutzer bzw. einen Dritten - hierbei handelt es sich um eine natürliche oder juristische Person, welche als externer Dienstleister entsprechende Datensätze bereitstellt, ohne eigens additive Bauteile fertigen zu wollen - erzeugt werden bzw. worden sein. Es ist demnach denkbar, dass der wenigstens eine zertifizierte Datensatz seitens des Nutzers bzw. des Dritten auf Grundlage von Informationen des Nutzers bzw. des Dritten, insbesondere auf Grundlage seitens des Nutzers bzw. des Dritten, bevorzugt unter definierten Fertigungsbedingungen, gegebenenfalls empirisch bzw. iterativ gewonnenen, Fertigungsergebnissen eines dem additiv zu fertigenden Bauteil (exakt) entsprechenden Referenzbauteils, erzeugt wird oder wurde.

In dieser Ausführungsform werden die seitens des Nutzers bzw. des Dritten als (potentieller) zertifizierter Datensatz bereitgestellten Informationen durch den Bereitsteller jedoch im Hinblick auf wenigstens ein bereitstellerseitig vorgebbares oder vorgegebenes Autorisierungskriterium, d. h. z. B. ein Sicherheitskriterium, Qualitätskriterium, etc., geprüft und nur bei positiver Autorisierung durch den Bereitsteller als zertifizierter Datensatz autorisiert.

In einer Ausführungsform kann das Prüfen kann ein Vergleichen wenigstens eines in dem zu autorisierenden Datensatz enthaltenen anlagenspezifischen Parameters und/oder bauteilspezifischen Parameters und/oder prozessspezifischen Parameters mit wenigstens einem, insbesondere jeweilig korrespondierenden, anlagenspezifischen und/oder bauteilspezifischen und/oder prozessspezifischen Referenzparameter sowie ein Erzeugen einer das jeweilige Vergleichsergebnis beschreibenden Vergleichsinformation umfassen.

In einer Ausführungsform kann das Autorisieren weiterhin ein Auswerten der Vergleichsinformation im Hinblick auf wenigstens ein Auswertekriterium, insbesondere dahin, ob dieses eine Über- oder Unterschreitung wenigstens eines parameterspezifischen Grenzwerts oder Grenzwertbereichs anzeigt, umfassen. Beispielsweise kann ein bauteilspezifischer Grenzwert bzw. Grenzwertbereich bestimmte geometrisch-konstruktive, chemische und/oder physikalische Eigenschaften betreffen, wobei ein Autorisieren nur bei deren Einhaltung erfolgt. Durch einen entsprechenden Grenzwert bzw. Grenzwertbereich kann ein zu erfüllendes Sicherheits- bzw. Qualitätskriterium definiert werden.

In einer Ausführungsform kann das Autorisieren im Weiteren ein Ausgeben wenigstens einer das Auswerte- bzw. Autorisierungsergebnis beschreibenden Auswerte- bzw. Autorisierungsinformation umfassen. Das Ausgeben einer entsprechenden Auswerte- bzw. Autorisierungsinformation kann über ein Ausgeben einer entsprechenden Auswerte- bzw. Autorisierungsinformation über eine, insbesondere akustische und/oder optische und/oder haptische, Ausgabeeinrichtung, d. h. z. B. ein Display, und/oder über ein datenmäßiges Übertragen einer entsprechenden Auswerteinformation an wenigstens einen Kommunikationspartner erfolgen.

In einer weiteren Ausführungsform, kann der wenigstens eine zertifizierte Datensatz eine bestimmte Anzahl, insbesondere eine Maximalanzahl, an auf Grundlage des wenigstens einen zertifizierten Datensatzes vermittels einer bestimmten additiven Fertigungsvorrichtung möglichen additiven Fertigungsvorgängen beinhalten. In dem wenigstens einen zertifizierten Datensatz kann sonach bestimmt sein, wie viele additiv zu fertigende Bauteile auf Grundlage des wenigstens einen zertifizierten Datensatzes maximal additiv gefertigt werden können. Der wenigstens eine zertifizierte Datensatz kann hardware- und/oder softwaretechnisch demnach so konfiguriert sein, dass mit diesem nur eine bestimmte Anzahl an Bauteilen definierter Bauteileigenschaften gefertigt werden können. Derart verfügt der Bereitsteller über eine Kontrollmöglichkeit im Zusammenhang mit der Nutzung des wenigstens einen zertifizierten Datensatzes, was ebenso eine probate Maßnahme gegen eine unautorisierte Verwendung des wenigstens einen zertifizierten Datensatzes darstellen kann.

Der wenigstens eine zertifizierte Datensatz, insbesondere die darin enthaltenen anlagenspezifischen Parameter und/oder bauteilspezifischen Parameter und/oder prozessspezifischen Parameter, sind von einem Nutzer nicht veränderbar. Der wenigstens eine zertifizierte Datensatz kann hardware- und/oder softwaretechnisch demnach so konfiguriert sein, d. h. insbesondere vor nutzerseitigen Veränderungen geschützt sein, dass ein Nutzer keine Änderungen an dem wenigstens einen zertifizierten Datensatz vornehmen kann. Dies kann z. B. über einen Schreibschutz der in dem wenigstens einen zertifizierten Datensatz enthaltenen Parameter realisiert sein. Der wenigstens eine zertifizierte Datensatz kann derart vor ungewünschten Manipulationen geschützt werden.

In einer weiteren Ausführungsform kann der wenigstens eine zertifizierte Datensatz verschlüsselt sein bzw. werden. Der wenigstens eine zertifizierte Datensatz kann hardware- und/oder softwaretechnisch demnach so konfiguriert sein, dass ein Schlüssel erforderlich ist, um diesen zu nutzen. Ein Nutzer kann den wenigstens einen zertifizierten Datensatz sonach nur nutzen, wenn er über einen entsprechenden Schlüssel zum Entschlüsseln verfügt. Ein entsprechender Schlüssel kann durch den Bereitsteller an einen Nutzer bereitgestellt werden. Die Bereitstellung eines entsprechenden Schlüssels kann mit dem Vorliegen einer einen erfolgreichen Bezahlvorgang eines Nutzers beschreibenden Bezahlinformation verknüpft sein.

Der wenigstens eine zertifizierte Datensatz wird durch den Bereitsteller auf einem mit wenigstens einem Kommunikationsnetzwerk verbindbaren oder verbundenen Datenspeicher, insbesondere einem Server, gegebenenfalls einem Cloud-Server, bereitgestellt, von welchem er von einem Nutzer abgerufen werden kann oder wird. Ein entsprechender Datenspeicher kann dem Bereitsteller zugeordnet sein; ein entsprechender Datenspeicher kann sonach im Bereich einer bereitstellerseitig verwalteten Daten- bzw. Kommunikationsinfrastruktur vorhanden sein. Bei dem Kommunikationsnetzwerk kann es sich um ein globales oder um ein lokales Kommunikationsnetzwerk, mithin z. B. um das Internet oder um ein Intranet, handeln. Durch das Bereitstellen des wenigstens einen zertifizierten Datensatzes auf einem entsprechenden Datenspeicher kann einem Nutzer grundsätzlich unabhängig von Ort und Zeit ein Abruf ermöglicht werden. Jedwede zwischen dem Datenspeicher und dem Nutzer hergestellte Kommunikationsverbindung kann verschlüsselt sein.

In einer Ausführungsform kann das Abrufen des wenigstens einen zertifizierten Datensatzes von dem wenigstens einen Datenspeicher über eine, gegebenenfalls nutzerindividuell konfigurierbare bzw. konfigurierte, datenspeicherseitige Benutzeroberfläche bzw. -schnittstelle erfolgen. Der Zugang zu einer entsprechenden Benutzeroberfläche bzw. -schnittstelle kann durch einen Loginvorgang eines Nutzers erfolgen. Sämtliche nutzerseitigen Interaktionen mit dem wenigstens einen Datenspeicher können z. B. über in nutzerseitigen (portablen) Endgeräten, wie z. B. Computer, Laptop, Smartphone, Tablet-PC, Smartwatch, Smartbrille, etc., implementierten web-basierte Anwendungen, wie z. B. bestimmte Software (Apps), Browser, etc., erfolgen.

In einer weiteren Ausführungsform kann der wenigstens eine zertifizierte Datensatz von einem Nutzer (nur) abgerufen werden, sofern, insbesondere datenspeicherseitig, eine einen (erfolgreichen) Bezahlvorgang des Nutzers beschreibende Bezahlinformation vorliegt. Ein Bezahlvorgang kann ein Bezahlvorgang für einen einmaligen Zugriff auf den Datenspeicher zum Abruf wenigstens eines bestimmten zertifizierten Datensatzes sein. Ein Bezahlvorgang kann jedoch - im Sinne eines Abonnements - auch ein Bezahlvorgang für einen mehrmaligen Zugriff auf den Datenspeicher zum Abruf wenigstens eines bestimmten zertifizierten Datensatzes innerhalb eines bestimmten Zeitraums, d. h. z. B. wenigstens einer Stunde, wenigstens eines Tags, wenigstens eines Monats, wenigstens eines Jahrs, etc., sein.

Ein Bezahlvorgang kann prinzipiell auf jedwede Weise vorgenommen werden. Der Nutzer kann Bezahlvorgänge z. B. konventionell durch Überweisen eines bestimmten Geldbetrags auf ein Geldkonto des Bereitstellers oder über geeignete Bezahldienste an einen virtuellen Zahlungsempfänger, d. h. z. B. über ein Internet-Zahlungsportal, vornehmen. Es ist auch denkbar, dass ein entsprechender Bezahldienst z. B., gegebenenfalls als eigenes Nutzersubmenü, in eine datenspeicherseitige Benutzeroberfläche bzw. -schnittstelle integriert ist. Ein entsprechender Bezahldienst kann alternativ oder ergänzend z. B. auch als Software ("App") für ein benutzerseitiges (portables) Endgerät, z. B. Computer, Laptop, Smartphone, Tablet-PC, Smartwatch, Smartbrille, etc., implementiert sein.

Der wenigstens eine zertifizierte Datensatz wird auf ein nutzerseitiges Zugriffsportal abgerufen bzw. auf einem solchen abgespeichert, von welchem er wiederum auf wenigstens eine nutzerseitige additive Fertigungseinrichtung abrufbar ist bzw. abgerufen wird. Mithin kann sich ein Nutzer - insoweit unabhängig von dem Bereitsteller - in einer eigenen nutzerseitig verwalteten Daten- bzw. Kommunikationsinfrastruktur ein Zugriffsportal einrichten, von welchem zertifizierte Datensätze auf wenigstens eine nutzerseitige additive Fertigungseinrichtung abgerufen werden können. Über das nutzerseitige Zugriffsportal können sonach (nur) solche zertifizierten Datensätze bereitgestellt und abgerufen werden, welche für den jeweiligen Nutzer, z. B. aufgrund eines bestimmten Bauteilprogramms in technischen Einrichtungen des Nutzers, relevant sind. Beispielsweise können über ein Zugriffsportal eines Nutzers aus dem Bereich der Verpackungstechnik nur solche zertifizierten Datensätze bereitgestellt und abgerufen werden, welche in den Verpackungsmaschinen des Nutzers tatsächlich verbaute Bauteile betreffen. Ein entsprechendes Zugriffsportal kann als, gegebenenfalls web-basierte, Plug-In-Lösung für eine nutzerseitig verwaltete Daten- bzw. Kommunikationsinfrastruktur vorliegen, sodass eine nutzerseitig verwaltete verwalteten Daten- bzw. Kommunikationsinfrastruktur auf einfache Weise um ein entsprechendes Zugriffsportal erweitert werden kann.

In einer weiteren Ausführungsform kann der wenigstens eine auf einem nutzerseitigen Zugriffsportal abgespeicherte zertifizierte Datensatz, auf wenigstens eine additive Fertigungseinrichtung eines Kunden des Nutzers abrufbar sein. Dies kann wiederum an das Vorliegen einer einen Bezahlvorgang eines Kunden des Nutzers an den Nutzer und/oder Bereitsteller beschreibenden Bezahlinformation geknüpft sein bzw. werden.

In einer weiteren Ausführungsform kann der wenigstens eine zertifizierte Datensatz und/oder ein nutzerseitiges Zugriffsportal, insbesondere als, gegebenenfalls web-basierte, Plug-In-Lösung, auf einem portablen, an einen Nutzer aushändigbaren oder ausgehändigten, insbesondere kommunikations- bzw. netzwerkfähigen, Datenträger, wie z. B. einem USB-Stick, CD-ROM, Speicherkarte, etc., bereitgestellt werden, von welchem er von einem Nutzer abgerufen wird oder werden kann.

Ein entsprechender kommunikations- bzw. netzwerkfähiger Datenträger kann eingerichtet sein, den additiven Fertigungsprozess betreffende Daten, d. h. z. B. Statusdaten, Fehlerdaten, etc. an einen Kommunikationspartner, d. h. z. B. den Bereitsteller, zu übertragen. Die Übertragung dieser Daten kann wiederum verschlüsselt erfolgen.

Ein entsprechender Datenträger kann an einen Nutzer ausgehändigt werden, sofern eine einen Bezahlvorgang des Nutzers beschreibende Bezahlinformation vorliegt. Die vorstehenden Ausführungen im Zusammenhang mit entsprechenden Bezahlinformationen und Bezahlvorgängen gelten analog.

In einer weiteren Ausführungsform kann im Rahmen des Anwendens des wenigstens einen additiven Fertigungsprozesses zur additiven Fertigung des oder wenigstens eines bestimmten Bauteils definierter Bauteileigenschaften auf Grundlage des wenigstens einen zertifizierten Datensatzes auf einer, insbesondere bereitstellerseitigen und/oder nutzerseitigen, Ausgabeeinrichtung, wie z. B. einem Display, wenigstens eine den Status des jeweiligen additiven Fertigungsprozesses betreffende Statusanzeige erzeugt und ausgegeben werden. Eine entsprechende Statusanzeige ermöglicht, gegebenenfalls in Echtzeit, eine Überwachung eines auf Grundlage des wenigstens einen zertifizierten Datensatzes durchgeführten additiven Fertigungsprozesses.

Ein weiterer Aspekt der hierin beschriebenen Erfindung betrifft ein System zur additiven Fertigung wenigstens eines bestimmten Bauteils definierter Bauteileigenschaften gemäß dem vorliegenden Anspruch 13. Das System ist zur Durchführung des hierin beschriebenen Verfahrens zur additiven Fertigung eines Bauteils definierter Bauteileigenschaften eingerichtet. Das System umfasst wenigstens eine einem Bereitsteller zuordenbare oder zugeordnete hardware- und/oder softwaremäßig implementierte Bereitstellungseinrichtung, welche zum Bereitstellen wenigstens eines zertifizierten Datensatzes, welcher von dem Bereitsteller für die additive Fertigung wenigstens eines bestimmten Bauteils definierter Bauteileigenschaften zertifizierte anlagenspezifische Parameter und/oder bauteilspezifische Parameter und/oder prozessspezifische Parameter beinhaltet, eingerichtet ist, sowie wenigstens eine einem Nutzer zuordenbare oder zugeordnete additive Fertigungseinrichtung, welche zum Anwenden wenigstens eines additiven Fertigungsprozesses zur additiven Fertigung wenigstens eines bestimmten Bauteils definierter Bauteileigenschaften auf Grundlage wenigstens eines bereitgestellten zertifizierten Datensatzes eingerichtet ist. Sämtliche Ausführungen im Zusammenhang mit dem Verfahren zur additiven Fertigung eines Bauteils definierter Bauteileigenschaften gelten analog für das System und umgekehrt.

Das System, d. h. insbesondere die Bereitstellungseinrichtung, kann ferner zum Bereitstellen eines zertifizierten Datensatzes, welcher von einem Bereitsteller für die Vorbereitung eines additiven Fertigungsprozesses des oder wenigstens eines bestimmten Bauteils definierter Bauteileigenschaften zertifizierte bauteilspezifische Parameter und/oder anlagenspezifische Parameter und/oder prozessspezifische Parameter beinhaltet, eingerichtet sein. Selbstverständlich kann das System auch zum Anwenden wenigstens einer Maßnahme zur Vorbereitung des oder wenigstens eines additiven Fertigungsprozesses zur additiven Fertigung wenigstens eines bestimmten Bauteils definierter Bauteileigenschaften auf Grundlage des zertifizierten Datensatzes eingerichtet sein. Hierfür kann das System geeignete Einrichtungen, d. h. z. B. Temperiereinrichtungen, Trocknungseinrichtungen, Inertisierungseinrichtungen, etc. zur Durchführung entsprechender vorbereitender Maßnahmen umfassen.

Das System kann ferner wenigstens eine, insbesondere optische, Erfassungseinrichtung, d. h. z. B. eine Kamera, umfassen. Das System kann dabei eingerichtet sein, ein Vergleichen wenigstens eines im Rahmen der additiven Fertigung des wenigstens einen additiv zu fertigenden Bauteils definierter Bauteileigenschaften vermittels der wenigstens einen Erfassungseinrichtung erfassten, die additive Fertigung des wenigstens einen additiv zu fertigenden Bauteils betreffenden Parameters mit wenigstens einem, insbesondere korrespondierenden, Referenzparameter, bei welchem es sich insbesondere um einen durch den wenigstens einen zertifizierten Datensatz beschriebenen anlagenspezifischen Parameter und/oder bauteilspezifischen Parameter und/oder prozessspezifischen Parameter handelt, durchzuführen. Mithin kann ein aktueller additiver Fertigungsprozess gegen den durch den wenigstens einen zertifizierten Datensatz beschriebenen additiven Fertigungsprozess geprüft werden. Derart kann eine Überwachung eines auf Grundlage des wenigstens einen zertifizierten Datensatzes erfolgenden additiven Fertigungsprozesses realisiert werden.

Das System kann ferner einer hardware- und/oder softwaremäßig implementierte Auswerteeinrichtung umfassen. Das System, d. h. insbesondere die wenigstens eine Auswerteeinrichtung, kann eingerichtet sein, ein Auswerten der Vergleichsinformation im Hinblick auf wenigstens ein Auswertekriterium, insbesondere dahin, ob dieses eine Über- oder Unterschreitung wenigstens eines parameterspezifischen Grenzwerts oder Grenzwertbereichs anzeigt, und ein Erzeugen einer das jeweilige Auswerteergebnis beschreibenden Auswerteinformation durchzuführen. Die Auswerteinformation kann insbesondere angeben, ob bzw. inwieweit das additiv gefertigte Bauteil wenigstens einem, insbesondere durch den wenigstens einen Grenzwert oder Grenzwertbereich definierten, Auswertekriterium genügt oder nicht genügt. Das Ausgeben kann über ein Ausgaben einer entsprechenden Auswerteinformation an einer, insbesondere akustischen und/oder optischen und/oder haptischen, Ausgabeeinrichtung, d. h. z. B. einem Display, und/oder über ein datenmäßiges Übertragen einer entsprechenden Auswerteinformation an wenigstens einen Kommunikationspartner erfolgen. Das System kann sonach auch wenigstens eine entsprechende Ausgabeeinrichtung umfassen.

Das System, d. h. insbesondere die Bereitstellungseinrichtung, kann ferner zum Bereitstellen eines zertifizierten Datensatzes, welcher von einem Bereitsteller für die Nachbereitung des oder wenigstens eines additiven Fertigungsprozesses wenigstens eines bestimmten Bauteils definierter Bauteileigenschaften zertifizierte bauteilspezifische Parameter und/oder anlagenspezifische Parameter und/oder prozessspezifische Parameter beinhaltet, eingerichtet sein. Selbstverständlich kann das System auch zum Anwenden wenigstens einer Maßnahme zur Nachbereitung des oder wenigstens eines additiven Fertigungsprozesses zur additiven Fertigung wenigstens eines bestimmten Bauteils definierter Bauteileigenschaften auf Grundlage des zertifizierten Datensatzes eingerichtet sein. Hierfür kann das System geeignete Einrichtungen, d. h. z. B. thermische Behandlungseinrichtungen, mechanische Bearbeitungseinrichtungen, etc. zur Durchführung entsprechender nachbereitender Maßnahmen umfassen.

Das System, d. h. insbesondere die wenigstens eine additive Fertigungseinrichtung, kann derart eingerichtet sein, dass das Anwenden wenigstens eines additiven Fertigungsprozesses zur additiven Fertigung wenigstens eines bestimmten Bauteils definierter Bauteileigenschaften auf Grundlage des zertifizierten Datensatzes vermittels einer nutzerseitigen additiven Fertigungseinrichtung vollautomatisiert, insbesondere ohne einen nutzerseitigen Eingriff, erfolgt.

Das System kann eine hardware- und/oder software-mäßig implementierte Autorisierungseinrichtung zur Autorisierung eines seitens eines Nutzers oder eines Dritten bereitgestellten (potentiellen) zertifizierten Datensatzes umfassen. Die Autorisierungseinrichtung ist insbesondere eingerichtet, entsprechende Informationen des Nutzers bzw. des Dritten im Hinblick auf wenigstens ein bereitstellerseitig vorgebbares oder vorgegebenes Autorisierungskriterium zu prüfen werden und nur bei positiver Autorisierung durch den Bereitsteller als zertifizierter Datensatz zu autorisieren.

Das System, d. h. insbesondere die Bereitstellungseinrichtung, kann hardware- und/oder software-mäßig eingerichtet sein, den wenigstens einen zertifizierte Datensatz derart zu konfigurieren, dass dieser eine bestimmte Anzahl an auf Grundlage des zertifizierten Datensatzes vermittels einer bestimmten additiven Fertigungsvorrichtung möglichen additiven Fertigungsvorgängen beinhaltet.

Das System, d. h. insbesondere die Bereitstellungseinrichtung, ist hardware- und/oder software-mäßig eingerichtet, den wenigstens einen zertifizierte Datensatz derart zu konfigurieren, dass der wenigstens eine zertifizierte Datensatz, insbesondere dessen Inhalt, von einem Nutzer nicht veränderbar ist.

Das System, d. h. insbesondere die Bereitstellungseinrichtung, kann hardware- und/oder software-mäßig eingerichtet sein, den wenigstens einen zertifizierte Datensatz derart zu konfigurieren, dass der wenigstens eine zertifizierte Datensatz verschlüsselt ist.

Das System umfasst einen mit wenigstens einem Kommunikationsnetzwerk verbindbaren oder verbundenen Datenspeicher, insbesondere einen Server, gegebenenfalls einen Cloud-Server, auf welchem der wenigstens eine zertifizierte Datensatz bereitstellbar ist, und von welchem der wenigstens eine zertifizierte Datensatz von einem Nutzer abgerufen werden kann oder wird.

Der wenigstens eine Datenspeicher kann hardware- und/oder software-mäßig eingerichtet sein, dass der wenigstens eine zertifizierte Datensatz von einem Nutzer abgerufen werden kann, sofern, insbesondere datenspeicherseitig, eine einen erfolgreichen Bezahlvorgang des Nutzers beschreibende Bezahlinformation vorliegt.

Das System umfasst ferner ein nutzerseitiges Zugriffsportal, sodass der wenigstens eine zertifizierte Datensatz auf das nutzerseitige Zugriffsportal abgerufen wird oder werden kann.

Der wenigstens eine zertifizierte Datensatz und/oder ein nutzerseitiges Zugriffsportal kann, insbesondere als Plug-In-Lösung, auf einem portablen, an einen Nutzer aushändigbaren oder ausgehändigten Datenträger bereitgestellt sein, von welchem er von einem Nutzer abgerufen wird oder werden kann.

Das System kann ferner wenigstens eine, insbesondere bereitstellerseitige und/oder nutzerseitige, Ausgabeeinrichtung, d. h. insbesondere eine, z. B. als Display ausgebildete, Ausgabeeinrichtung umfassen, sodass im Rahmen des Anwendens des wenigstens einen additiven Fertigungsprozesses zur additiven Fertigung des oder wenigstens eines bestimmten Bauteils definierter Bauteileigenschaften auf Grundlage des zertifizierten Datensatzes auf der Ausgabeeinrichtung wenigstens eine den Status des jeweiligen additiven Fertigungsprozesses betreffende Statusanzeige erzeugbar oder erzeugt ist.

Die wenigstens eine additive Fertigungseinrichtung kann z. B. zur Durchführung eines additiven Fertigungsprozesses, in welchem ein auf Kunststoff basierendes Baumaterial zur additiven Fertigung des wenigstens einen Bauteils verwendet wird, eingerichtet sein. Insbesondere kann die wenigstens eine additive Fertigungseinrichtung als Fused-Deposition-Modelling ("FDM")-Einrichtung ausgebildet sein oder wenigstens eine solche umfassen. Selbstverständlich sind anders konfigurierte additive Fertigungseinrichtungen ebenso denkbar.

Die Erfindung ist anhand von Ausführungsbeispielen in den Zeichnungen näher erläutert. Dabei zeigt:
- Fig. 1, 2: jeweils eine Prinzipdarstellung eines Systems zur additiven Fertigung eines Bauteils definierter Bauteileigenschaften gemäß einem Ausführungsbeispiel;
- Fig. 3: eine Prinzipdarstellung einer an einer Ausgabeeinrichtung ausgebbaren Auswerteinformation;
- Fig. 4: eine Prinzipdarstellung einer Benutzeroberfläche eines nutzerseitigen Zugriffsportals; und
- Fig. 5: eine Prinzipdarstellung einer Statusanzeige.

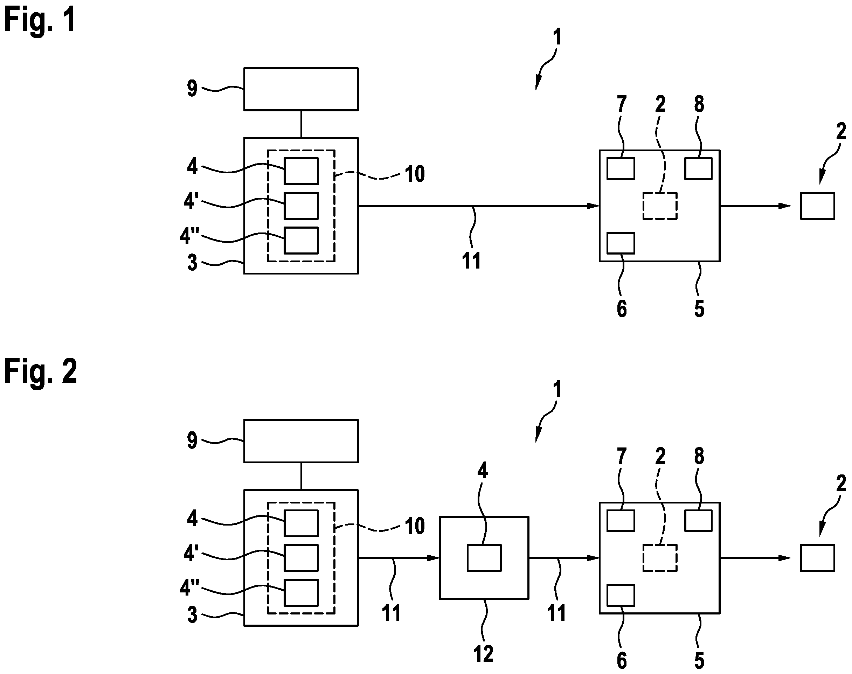

Fig. 1 zeigt eine Prinzipdarstellung eines Systems 1 zur additiven Fertigung wenigstens eines bestimmten Bauteils 2 definierter Bauteileigenschaften. Das System 1 umfasst eine einem Bereitsteller zuordenbare oder zugeordnete hardware- und/oder softwaremäßig implementierte Bereitstellungseinrichtung 3, welche zum Bereitstellen wenigstens eines zertifizierten Datensatzes 4, welcher von dem Bereitsteller für die additive Fertigung wenigstens eines bestimmten Bauteils 2 definierter Bauteileigenschaften zertifizierte anlagenspezifische Parameter und/oder bauteilspezifische Parameter und/oder prozessspezifische Parameter beinhaltet, eingerichtet ist, sowie eine einem Nutzer zuordenbare oder zugeordnete additive Fertigungseinrichtung 5, welche zum Anwenden eines additiven Fertigungsprozesses zur additiven Fertigung eines bestimmten Bauteils definierter Bauteileigenschaften auf Grundlage eines bereitgestellten zertifizierten Datensatzes 4 eingerichtet ist.

Das System 1 ist zur Durchführung eines Verfahrens zur additiven Fertigung eines Bauteils 2 definierter Bauteileigenschaften eingerichtet, welches Verfahren im Folgenden näher erläutert wird.

Mit dem System 1 sowie mit dem mit dem System 1 implementierbaren Verfahren lassen sich grundsätzlich die unterschiedlichsten Bauteile 2 bzw. Bauteilgruppen additiv fertigen. Insbesondere lassen sich technische Bauteile bzw. Bauteilgruppen additiv fertigen. In diesem Zusammenhang können sowohl neu konstruierte technische Bauteile 2 bzw. Bauteilgruppen als auch Ersatz- oder Nachrüstbauteile bzw. Ersatz- oder Nachrüstbauteilgruppen einer bestimmten technischen Einrichtung, wie z. B. einer Maschine, additiv gefertigt werden. Beispiele für technische Gebiete, in welchen sich verfahrensgemäß gefertigte Bauteile 2 bzw. Bauteilgruppen und somit auch das Verfahren einsetzen lassen, sind das Gebiet der Automatisierung, Robotik, Handling, Verpackung, etc. Mithin lassen sich verfahrensgemäß z. B. Bauteile bzw. Bauteilgruppen für Automatisierungs-, Robotik-, Handlings- und Verpackungseinrichtungen additiv fertigen. Konkret kann es sich bei solchen Bauteilen 2 bzw. Bauteilgruppen z. B. um Handhabungselemente, wie z. B. Greifelemente, Saugelemente, etc., handeln. Jeweilige Bauteile 2 bzw. Bauteilgruppen können mit wenigstens einer, z. B. durch innere Strukturen, wie z. B. von einem Temperiermedium durchströmbaren Temperierkanalstrukturen, von einem Strömungsmedium durchströmbaren Strömungskanalstrukturen, etc., gebildeten, zusätzlichen Funktionalität gefertigt werden.

Das Verfahren umfasst die im Folgenden näher beschriebenen Schritte:
In einem ersten Schritt des Verfahrens erfolgt vermittels der Bereitstellungseinrichtung 3 ein Bereitstellen eines zertifizierten Datensatzes 4, welcher von einem Bereitsteller für einen additiven Fertigungsprozess wenigstens eines bestimmten Bauteils 2 definierter Bauteileigenschaften zertifizierte anlagenspezifische Parameter und/oder bauteilspezifische Parameter und/oder prozessspezifische Parameter beinhaltet. In dem ersten Schritt des Verfahrens wird vermittels der Bereitstellungseinrichtung 3 sonach wenigstens ein zertifizierter Datensatz 4 bereitgestellt, welcher zertifizierte anlagenspezifische Parameter und/oder bauteilspezifische Parameter und/oder prozessspezifische Parameter für einen additiven Fertigungsprozess wenigstens eines Bauteils 2 definierter Bauteileigenschaften beinhaltet. Der erste Schritt wird typischerweise von einem Bereitsteller durchgeführt.

Der zertifizierte Datensatz 4 beinhaltet typischerweise sämtliche erforderlichen anlagenspezifischen Parameter und/oder bauteilspezifischen Parameter und/oder prozessspezifischen Parameter, welche für die additive Fertigung eines bestimmten Bauteils 2 definierter Bauteileigenschaften erforderlich sind. Mit anderen Worten liegen in dem zertifizierten Datensatz 4 sämtliche anlagenspezifischen und/oder bauteilspezifischen und/oder prozessspezifischen Informationen zur additiven Fertigung eines jeweiligen bestimmten Bauteils 2 definierter Bauteileigenschaften, d. h. insbesondere auch maschinenlesbare Steuerinformationen zur Steuerung bzw. Regelung des Betriebs der zur Durchführung eines additiven Fertigungsprozesses zur additiven Fertigung des jeweiligen Bauteils 2 definierter Bauteileigenschaften verwendeten additiven Fertigungseinrichtung 5, vor.

Mithin kann für jedwedes verfahrensgemäß zu fertigende bzw. gefertigte Bauteil 2 ein eigener zertifizierter Datensatz 4 bereitgestellt werden. Dies insbesondere deshalb, als zur Realisierung bestimmter Bauteileigenschaften bestimmte anlagenspezifische Parameter und/oder bauteilspezifische Parameter und/oder prozessspezifische Parameter erforderlich sind, mithin bestimmte Bauteileigenschaften mit bestimmten anlagenspezifischen Parametern und/oder bauteilspezifischen Parametern und/oder prozessspezifischen Parametern korreliert sein können, sodass nur eine bestimmte Kombination von anlagenspezifischen Parametern und/oder bauteilspezifischen Parametern und/oder prozessspezifischen Parametern eine zuverlässige und reproduzierbare additive Fertigung eines Bauteils 2 definierter Bauteileigenschaften ermöglicht. Hieraus ergibt sich, dass der zertifizierte Datensatz 4 typischerweise eine bestimmte Kombination von anlagenspezifischen Parametern und/oder bauteilspezifischen Parametern und/oder prozessspezifischen Parametern zur Herstellung eines bestimmten Bauteils 2 definierter Bauteileigenschaften beinhaltet.

Eine in dem zertifizierten Datensatz 4 enthaltene bestimmte Kombination entsprechender Parameter bezieht sich dabei typischerweise auf einen mit einer bestimmten additiven Fertigungseinrichtung 5 durchführbaren bestimmten additiven Fertigungsprozess eines bestimmten Bauteils 2 definierter Bauteileigenschaften. Der zertifizierte Datensatz 4 beinhaltet demnach typischerweise eine für einen bestimmten, mit einer bestimmten additiven Fertigungseinrichtung 5 durchführbaren additiven Fertigungsprozess maßgeschneiderte Kombination an anlagenspezifischen Parametern und/oder bauteilspezifischen Parametern und/oder prozessspezifischen Parametern, welche Kombination eine zuverlässige und reproduzierbare additive Fertigung eines Bauteils 2 definierter Bauteileigenschaften ermöglicht. Mithin können sich zertifizierte Datensätze 4 zur Fertigung von Bauteilen 2 derselben definierten Bauteileigenschaften dennoch in wenigstens einem anlagenspezifischen Parameter und/oder bauteilspezifischen Parameter und/oder prozessspezifischen Parameter unterscheiden, sofern diese unterschiedlichen additiven Fertigungsprozessen und/oder dem Betrieb unterschiedlicher additiver Fertigungseinrichtungen 5 zugrunde gelegt werden.

Im Rahmen der Durchführung des Verfahrens stellt ein Nutzer des Verfahrens, welcher eine additive Fertigung eines Bauteils 2 definierter Bauteileigenschaften vornehmen möchte, den ihm über die Bereitstellungseinrichtung 3 bereitgestellten zertifizierten Datensatz 4 der zur Durchführung eines additiven Fertigungsprozesses zur additiven Fertigung des jeweiligen Bauteils 2 definierter Bauteileigenschaften verwendeten additiven Fertigungseinrichtung 5 zur Verfügung, woraufhin der additive Fertigungsprozess zur Fertigung des jeweiligen Bauteils 2 definierter Bauteileigenschaften ohne nutzerseitigen Eingriff, insbesondere vollautomatisch, allein auf Grundlage des zertifizierten Datensatzes 4 durchgeführt werden kann. Das Anwenden wenigstens eines additiven Fertigungsprozesses zur additiven Fertigung wenigstens eines bestimmten Bauteils 2 definierter Bauteileigenschaften auf Grundlage des zertifizierten Datensatzes 4 vermittels der nutzerseitigen additiven Fertigungseinrichtung 5 kann sonach vollautomatisiert, insbesondere ohne einen nutzerseitigen Eingriff, erfolgen.

Der zertifizierte Datensatz 4 beinhaltet, wie bereits angedeutet, auch maschinenlesbare Steuerinformation zur, insbesondere vollautomatischen, Steuerung bzw. Regelung des Betriebs der additiven Fertigungseinrichtung 5 zur additiven Fertigung des additiv zu fertigenden Bauteils 2 auf Grundlage des zertifizierten Datensatzes 4. Bei entsprechenden Steuerinformationen handelt es sich um einen jeweiligen Maschinencode (G-Code) der additiven Fertigungseinrichtung 5. Entsprechende Steuerinformationen können unmittelbar oder mittelbar durch entsprechende in dem zertifizierten Datensatz 4 enthaltene anlagenspezifische Parameter und/oder bauteilspezifische Parameter und/oder prozessspezifische Parameter beschrieben werden.

Zur additiven Fertigung des Bauteils 2 definierter Bauteileigenschaften benötigt ein Nutzer demnach nur eine additive Fertigungseinrichtung 5 und einen entsprechenden zertifizierten Datensatz 4, welcher der additiven Fertigungseinrichtung 5, d. h. typischerweise einer den Betrieb der additiven Fertigungseinrichtung steuernden bzw. regelnden hardware- und/oder software-mäßig implementierten Steuereinrichtung 6, datenmäßig zur Verfügung wird.

Ein Nutzer des Verfahrens muss sonach keine Erarbeitung entsprechender Parameter vornehmen, welche ihm eine zuverlässige und reproduzierbare additive Fertigung eines jeweiligen Bauteils 2 definierter Bauteileigenschaften ermöglichen, da sämtliche Parameter bereits in dem dem additiven Fertigungsprozess zugrunde zulegenden zertifizierten Datensatz 4 enthalten sind. Ein Nutzer des Verfahrens benötigt ferner keine eigenen Erfahrungen oder Kenntnisse im Bereich der additiven Fertigung, da sämtliches "Wissen" über die nutzerseitig angestrebte additive Fertigung eines jeweiligen Bauteils 2 definierter Bauteileigenschaften in dem wenigstens einen zertifizierten Datensatz 4 enthalten ist.

Dem ersten Schritt kann vorausgehen, dass ein Bereitsteller entsprechende zertifizierte anlagenspezifische Parameter und/oder bauteilspezifische Parameter und/oder prozessspezifische Parameter für einen additiven Fertigungsprozess definiert und datenmäßig in einem entsprechenden zertifizierten Datensatz 4 zusammenfasst bzw. zusammengefasst hat. Mithin kann auch das Definieren entsprechender anlagenspezifischer Parameter und/oder bauteilspezifischer Parameter und/oder prozessspezifischer Parameter und das Zusammenfassen dieser in einem entsprechenden zertifizierten Datensatz 4 einen Schritt des Verfahrens darstellen.

In einem zweiten Schritt des Verfahrens erfolgt ein Anwenden eines additiven Fertigungsprozesses zur additiven Fertigung eines bestimmten Bauteils 2 definierter Bauteileigenschaften auf Grundlage des in dem ersten Schritt bereitgestellten zertifizierten Datensatzes 4.

In dem zweiten Schritt können grundsätzlich sämtliche additiven Fertigungsprozesse, d. h. insbesondere sämtliche pulver(bett)basierten additiven Fertigungsprozesse sowie sämtliche nicht pulver(bett)basierten additiven Fertigungsprozesse, angewendet werden. Ein in dem zweiten Schritt konkret angewendeter additiver Fertigungsprozess ist insbesondere durch die in dem jeweilig eingesetzten zertifizierten Datensatz 4 enthaltenen anlagenspezifischen Parameter und/oder prozessspezifischen Parameter definiert.

In dem zweiten Schritt können, je nach konkret angewendetem additiven Fertigungsprozess, grundsätzlich verschiedene Baumaterialien, d. h. z. B. Metalle, Kunststoffe, etc., verarbeitet werden. Entsprechend kann in dem zweiten Schritt z. B. ein additiver Fertigungsprozess angewendet werden, in welchem ein auf Metall oder Kunststoff basierendes Baumaterial zur additiven Fertigung des Bauteils 2 verarbeitet bzw. verwendet wird. Insbesondere kann in dem zweiten Schritt ein Fused-Deposition-Modelling ("FDM")-Prozess angewendet werden, in welchem ein auf Kunststoff basierendes Baumaterial zur additiven Fertigung des Bauteils 2 verwendet wird. FDM-Prozesse zeichnen sich durch eine vergleichsweise hohe Baurate bei gleichzeitig sehr guten Bauteileigenschaften aus. Das Verfahren lässt sich jedoch auch mit anderen additiven Fertigungsprozessen, wie z. B. Binder-Jetting-Prozessen, Digital-Light-Synthesis-Prozessen, CLIP-Prozessen, SLM-Prozessen, SLS-Prozessen, SEBM-Prozessen, Stereolithographie-Prozessen, etc., realisieren.

Das Verfahren kann auch das Bereitstellen eines zertifizierten Datensatzes 4', welcher von einem Bereitsteller für die Vorbereitung eines additiven Fertigungsprozesses des oder wenigstens eines bestimmten Bauteils 2 definierter Bauteileigenschaften zertifizierte anlagenspezifische Parameter und/oder bauteilspezifische Parameter und/oder prozessspezifische Parameter beinhaltet, sowie das Anwenden wenigstens einer Maßnahme zur Vorbereitung des oder wenigstens eines additiven Fertigungsprozesses zur additiven Fertigung eines bestimmten Bauteils 2 definierter Bauteileigenschaften auf Grundlage des zertifizierten Datensatzes 4' beinhaltet, umfassen. Ein Nutzer benötigt sonach (auch) keine eigenen Kenntnisse über eine entsprechende vorbereitende Maßnahme, als sämtliches hierzu erforderliches "Wissen" in dem zertifizierten Datensatz 4' enthalten sein kann.

Die wenigstens eine Maßnahme zur Vorbereitung des auf Grundlage des wenigstens einen zertifizierten Datensatzes 4' angewendeten additiven Fertigungsprozesses kann z. B. eine Maßnahme zur Vorbereitung eines im Rahmen des zur additiven Fertigung eines Bauteils 2 bestimmter Bauteileigenschaften durchgeführten additiven Fertigungsprozesses zu verwendenden Baumaterials, insbesondere eine Temperierung, Trocknung, Inertisierung, etc. des Baumaterials, umfassen. Die Maßnahme ist typischerweise im Hinblick auf einen konkret anzuwendenden additiven Fertigungsprozess bzw. ein im Rahmen der Durchführung eines konkret anzuwendenden additiven Fertigungsprozesses konkret eingesetzten Baumaterials gewählt. Beispielsweise können z. B. pulver(bett)basierte additive Fertigungsprozesse andere vorbereitende Maßnahmen erfordern, als nicht pulver(bett)basierte additive Fertigungsprozesse.

Das Verfahren kann auch das Bereitstellen eines zertifizierten Datensatzes 4", welcher von einem Bereitsteller für die Nachbereitung des oder wenigstens eines additiven Fertigungsprozesses eines bestimmten Bauteils 2 definierter Bauteileigenschaften zertifizierte anlagenspezifische Parameter und/oder bauteilspezifische Parameter und/oder prozessspezifische Parameter beinhaltet, sowie das Anwenden wenigstens einer Maßnahme zur Nachbereitung des oder wenigstens eines additiven Fertigungsprozesses zur additiven Fertigung eines bestimmten Bauteils definierter Bauteileigenschaften auf Grundlage des zertifizierten Datensatzes 4", umfassen. Ein Nutzer benötigt sonach (auch) keine eigenen Kenntnisse über eine entsprechende nachbereitende Maßnahme, als sämtliches hierzu erforderliches "Wissen" in dem zertifizierten Datensatz 4" enthalten sein kann.

Die wenigstens eine Maßnahme zur Nachbereitung des additiven Fertigungsprozesses kann eine Maßnahme zur Nachbearbeitung des im Rahmen des auf Grundlage des wenigstens einen zertifizierten Datensatzes angewendeten additiven Fertigungsprozesses additiv gefertigten Bauteils 2, insbesondere eine mechanische und/oder thermische Nachbehandlung des additiv gefertigten Bauteils 2, wie z. B. eine zumindest abschnittsweise mechanische Oberflächenbearbeitung zur Erzeugung bestimmter Oberflächeneigenschaften, eine zumindest abschnittsweise thermische Behandlung zur Erzeugung bestimmter struktureller Eigenschaften, etc., umfassen. Die Maßnahme ist typischerweise im Hinblick auf einen konkret angewendeten additiven Fertigungsprozess bzw. ein im Rahmen der Durchführung eines konkret angewendeten additiven Fertigungsprozesses konkret eingesetzten Baumaterials gewählt. Beispielsweise können z. B. vermittels pulver(bett)basierten additiven Fertigungsprozessen gefertigte Bauteile 2 andere nachbereitende Maßnahmen erfordern, als nicht vermittels pulver(bett)basierten additiven Fertigungsprozessen gefertigte Bauteile 2. Gleichermaßen können z. B. aus Metall gefertigte Bauteile 2 andere nachbereitende Maßnahmen erfordern, als aus Kunststoff gefertigte Bauteile 2.

Es ist ebenso denkbar, dass ein zertifizierter Datensatz 4, 4', 4" sowohl von einem Bereitsteller für einen additiven Fertigungsprozess wenigstens eines bestimmten Bauteils definierter Bauteileigenschaften zertifizierte anlagenspezifische Parameter und/oder bauteilspezifische Parameter und/oder prozessspezifische Parameter als auch von einem Bereitsteller für die Vorbereitung und/oder Nachbereitung eines additiven Fertigungsprozesses des oder wenigstens eines bestimmten Bauteils definierter Bauteileigenschaften zertifizierte anlagenspezifische Parameter und/oder bauteilspezifische Parameter und/oder prozessspezifische Parameter beinhaltet.

Nachfolgend werden in nicht abschließender Aufzählung Beispiele für, insbesondere bereitstellerseitig, zertifizierbare bzw. zertifizierte bauteilspezifische Parameter gegeben, welche in einem zertifizierten Datensatz 4 enthalten sein können.

Der zertifizierte Datensatz 4 kann als bauteilspezifischen Parameter z. B. wenigstens einen geometrisch-konstruktiven Parameter des wenigstens einen additiv zu fertigenden Bauteils 2, insbesondere alle geometrisch-konstruktiven Parameter des wenigstens einen additiv zu fertigenden Bauteils 2, beinhalten. Der zertifizierte Datensatz 4 kann sonach einen oder mehrere, insbesondere sämtlichen, geometrisch-konstruktiven Parameter, d. h. z. B. Abmessungen, Form, Volumen, etc., des additiv zu fertigenden Bauteils 2 beinhalten. Die geometrisch-konstruktiven Eigenschaften des additiv zu fertigenden Bauteils 2 und die sich hieraus ergebende konstruktive wie auch funktionelle Gestaltung des additiv zu fertigenden Bauteils 2 können sonach durch den zertifizierten Datensatz 4, insbesondere vollständig, definiert sein bzw. werden.

Der zertifizierte Datensatz 4 kann als bauteilspezifischen Parameter alternativ oder ergänzend wenigstens einen chemischen Parameter des additiv zu fertigenden Bauteils 2, insbesondere alle chemischen Parameter des additiv zu fertigenden Bauteils 2, beinhalten. Der zertifizierte Datensatz 4 kann sonach einen oder mehrere, insbesondere sämtlichen, chemischen Parameter, d. h. z. B. chemische Alterung, insbesondere in bestimmten chemischen Umgebungen, chemische Reaktivität, insbesondere in bestimmten chemischen Umgebungen, chemische Verträglichkeit mit bestimmten Medien, chemische Zusammensetzung, etc., des additiv zu fertigenden Bauteils 2 beinhalten. Die chemischen Eigenschaften des additiv zu fertigenden Bauteils 2 können sonach durch den zertifizierten Datensatz 4, insbesondere vollständig, definiert sein bzw. werden.

Der zertifizierte Datensatz 4 kann als bauteilspezifischen Parameter alternativ oder ergänzend wenigstens einen physikalischen Parameter des additiv zu fertigenden Bauteils 4, insbesondere alle physikalischen Parameter des additiv zu fertigenden Bauteils 4, beinhalten. Der zertifizierte Datensatz 4 kann sonach einen oder mehrere, insbesondere sämtlichen, physikalischen Parameter, d. h. z. B. elektrische Parameter, wie z. B. elektrische Leitfähigkeit, mechanische Parameter, wie z. B. Festigkeit, Härte, Duktilität, etc., thermische Parameter, wie z. B. Wärmeleitfähigkeit, Wärmekapazität, etc., tribologische Parameter, wie z. B. Rauigkeit, sowie sonstige physikalischen Parameter, wie z. B. Dichte, Masse, etc., des additiv zu fertigenden Bauteils 2 beinhalten. Die physikalischen Eigenschaften des additiv zu fertigenden Bauteils 2 können sonach durch den zertifizierten Datensatz 4, insbesondere vollständig, definiert sein bzw. werden.

Nachfolgend werden in nicht abschließender Aufzählung Beispiele für, insbesondere bereitstellerseitig, zertifizierbare bzw. zertifizierte anlagenspezifische Parameter gegeben, welche in dem zertifizierten Datensatz 4 enthalten sein können.

Der zertifizierte Datensatz 4 kann als anlagenspezifischen Parameter z. B. wenigstens einen Abmessungsparameter, wie z. B. Länge, Breite, Form, etc., wenigstens eines Baufelds bzw. einer Bauebene einer zur additiven Fertigung des additiv zu fertigenden Bauteils 2 zu verwendenden oder verwendeten additiven Fertigungseinrichtung 5, insbesondere alle Abmessungsparameter wenigstens eines Baufelds einer zur additiven Fertigung des additiv zu fertigenden Bauteils 2 zu verwendenden oder verwendeten additiven Fertigungseinrichtung 5, beinhalten. Die Abmessungen wenigstens eines Baufelds bzw. einer Bauebene einer zur additiven Fertigung des additiv zu fertigenden Bauteils 2 zu verwendenden oder verwendeten additiven Fertigungseinrichtung 5 können sonach durch den zertifizierten Datensatz 4, insbesondere vollständig, definiert sein bzw. werden.

Der zertifizierte Datensatz 4 kann als anlagenspezifischen Parameter alternativ oder ergänzend wenigstens einen Abmessungsparameter, wie z. B. Länge, Breite, Höhe bzw. Tiefe, Raumform, wenigstens eines Bauvolumens einer zur additiven Fertigung des additiv zu fertigenden Bauteils 2 zu verwendenden oder verwendeten additiven Fertigungseinrichtung 5, insbesondere alle Abmessungsparameter wenigstens eines Bauvolumens einer zur additiven Fertigung des additiv zu fertigenden Bauteils 2 zu verwendenden oder verwendeten additiven Fertigungseinrichtung 5, beinhalten. Die Abmessungen wenigstens eines Bauvolumens einer zur additiven Fertigung des additiv zu fertigenden Bauteils 2 zu verwendenden oder verwendeten additiven Fertigungseinrichtung 5 können sonach durch den zertifizierten Datensatz 4, insbesondere vollständig, definiert sein bzw. werden.

Der zertifizierte Datensatz 4 kann als anlagenspezifischen Parameter alternativ oder ergänzend wenigstens einen Fertigungsparameter, wie z. B. einen die Baurate beeinflussenden Bauratenparameter, einen einen Materialvorschubvorgang eines in einem Baufeld bzw. Bauvolumen selektiv anzuordnenden, insbesondere strangartigen bzw. - förmigen, Baumaterials beeinflussenden Vorschubparameter, einen einen Aufbring- bzw. Beschichtungsvorgang eines in einem Baufeld aufzubringenden, insbesondere pulverartigen bzw. -förmigen, Baumaterials beeinflussenden Aufbring- bzw. Beschichtungsparameter, einen einen Belichtungs- bzw. Bestrahlungsvorgang eines in einem Baufeld aufgebrachten, zu belichtenden bzw. zu bestrahlenden Baumaterials vermittels wenigstens eines Energiestrahls - wie z. B. eines Elektronen- oder Laserstrahls -, insbesondere zum Zwecke der selektiven Verfestigung und/oder zum Zwecke der selektiven Temperierung des Baumaterials, beeinflussenden Belichtungs- bzw. Bestrahlungsparameter, d. h. z. B. Energiestrahlanzahl, Energiestrahlintensität bzw. -leistung, Energiestrahlfokusgröße, Energiestrahlfokusposition, etc., einer zur additiven Fertigung des additiv zu fertigenden Bauteils 2 zu verwendenden oder verwendeten additiven Fertigungseinrichtung 5, insbesondere alle Fertigungsparameter einer zur additiven Fertigung des additiv zu fertigenden Bauteils 2 zu verwendenden oder verwendeten additiven Fertigungseinrichtung 5, beinhalten. Die Fertigungsparameter einer zur additiven Fertigung des additiv zu fertigenden Bauteils 2 zu verwendenden oder verwendeten additiven Fertigungseinrichtung 5 können sonach durch den zertifizierten Datensatz 4, insbesondere vollständig, definiert sein bzw. werden.

Der zertifizierte Datensatz 4 kann als anlagenspezifischen Parameter alternativ oder ergänzend wenigstens einen Anlagentypparameter, insbesondere einen Baureihen-, Modell-, Typ- und/oder Herstellerparameter, einer zur additiven Fertigung des additiv zu fertigenden Bauteils 2 zu verwendenden oder verwendeten additiven Fertigungseinrichtung 5, insbesondere alle Anlagentypparameter einer zur additiven Fertigung des additiv zu fertigenden Bauteils 2 zu verwendenden oder verwendeten additiven Fertigungseinrichtung 5, beinhalten. Die Anlagentypparameter einer zur additiven Fertigung des additiv zu fertigenden Bauteils 2 zu verwendenden oder verwendeten additiven Fertigungseinrichtung 5 können sonach durch den zertifizierten Datensatz 4, insbesondere vollständig, definiert sein bzw. werden.

Nachfolgend werden in nicht abschließender Aufzählung Beispiele für, insbesondere bereitstellerseitig, zertifizierbare bzw. zertifizierte prozessspezifische Parameter gegeben, welche in dem zertifizierten Datensatz 4 enthalten sein können.

Der zertifizierte Datensatz 4 kann als prozessspezifischen Parameter wenigstens einen Baumaterialparameter, insbesondere die chemische und/oder physikalische Zusammensetzung eines Baumaterials, die Pulvergrößenverteilung und/oder Pulvermorphologie eines Baumaterialpulvers, sofern ein pulverartiges bzw. -förmiges Baumaterial eingesetzt wird, Abmessungen bzw. Querschnittsgeometrie eines Baumaterialstrangs, sofern ein strangartig bzw. -förmiges Baumaterial eingesetzt wird, die Viskosität eines flüssigen Baumaterials, sofern ein flüssiges Baumaterial eingesetzt wird, den Reinheitsgrad bzw. Rezyklierungsanteil eines Baumaterials, das Mischungsverhältnis eines Baumaterials, sofern ein mehrere unterschiedliche Baumaterialkomponenten umfassendes Baumaterial eingesetzt wird, etc., wenigstens eines Baumaterials, welches von wenigstens einer zur additiven Fertigung des additiv zu fertigenden Bauteils 2 zu verwendenden oder verwendeten additiven Fertigungseinrichtung 5 zur additiven Fertigung einsetzbar ist bzw. eingesetzt wird, insbesondere alle Baumaterialparameter wenigstens eines Baumaterials, welches von einer zur additiven Fertigung des additiv zu fertigenden Bauteils 2 zu verwendenden oder verwendeten additiven Fertigungseinrichtung 5 zur additiven Fertigung einsetzbar ist, beinhalten. Die Baumaterialparameter wenigstens eines zur additiven Fertigung des additiv zu fertigenden Bauteils 2 zu verwendenden oder verwendeten Baumaterials können sonach durch den zertifizierten Datensatz 4, insbesondere vollständig, definiert sein bzw. werden.

Der zertifizierte Datensatz 4 kann als prozessspezifischen Parameter alternativ oder ergänzend wenigstens einen chemischen Prozessparameter, insbesondere eine chemische Atmosphäre, wie z. B. eine inerte Atmosphäre, innerhalb wenigstens eines Bau- und/oder Prozessraums bzw. -volumens einer zur additiven Fertigung des additiv zu fertigenden Bauteils 2 zu verwendenden oder verwendeten additiven Fertigungseinrichtung 5, insbesondere alle chemischen Prozessparameter wenigstens eines Bau- und/oder Prozessraums bzw. -volumens einer zur additiven Fertigung des additiv zu fertigenden Bauteils 2 zu verwendenden oder verwendeten additiven Fertigungseinrichtung 5, beinhalten. Die chemischen Prozessparameter innerhalb wenigstens eines Bau- und/oder Prozessraums bzw. -volumens einer zur additiven Fertigung des additiv zu fertigenden Bauteils 2 zu verwendenden oder verwendeten additiven Fertigungseinrichtung 5 können sonach durch den zertifizierten Datensatz 4, insbesondere vollständig, definiert sein bzw. werden.

Der zertifizierte Datensatz 4 kann als prozessspezifischen Parameter alternativ oder ergänzend wenigstens einen physikalischen Prozessparameter, insbesondere Feuchtigkeit, Druck, Temperatur, etc., außerhalb und/oder innerhalb wenigstens eines Bau- und/oder Prozessraums bzw. -volumens einer zur additiven Fertigung des additiv zu fertigenden Bauteils 2 zu verwendenden oder verwendeten additiven Fertigungseinrichtung 5, insbesondere alle physikalischen Prozessparameter wenigstens eines Bau- und/oder Prozessraums einer zur additiven Fertigung des additiv zu fertigenden Bauteils 2 zu verwendenden oder verwendeten additiven Fertigungseinrichtung 5, beinhalten. Die physikalischen Prozessparameter außerhalb und/oder innerhalb wenigstens eines Bau- und/oder Prozessraums bzw. -volumens einer zur additiven Fertigung des additiv zu fertigenden Bauteils 2 zu verwendenden oder verwendeten additiven Fertigungseinrichtung 5 können sonach durch den zertifizierten Datensatz 4, insbesondere vollständig, definiert sein bzw. werden.

Der zertifizierte Datensatz 4 kann als prozessspezifischen Parameter alternativ oder ergänzend wenigstens einen klimatischen Prozessparameter, insbesondere Feuchtigkeit, Druck, Temperatur, außerhalb und/oder innerhalb wenigstens einer Umgebung einer zur additiven Fertigung des additiv zu fertigenden Bauteils 2 zu verwendenden oder verwendeten additiven Fertigungseinrichtung5, insbesondere alle klimatischen Prozessparameter einer zur additiven Fertigung des additiv zu fertigenden Bauteils 2 zu verwendenden oder verwendeten additiven Fertigungseinrichtung 5, beinhalten. Die klimatischen Prozessparameter außerhalb und/oder innerhalb wenigstens einer Umgebung einer zur additiven Fertigung des additiv zu fertigenden Bauteils 2 zu verwendenden oder verwendeten additiven Fertigungseinrichtung 4 können sonach durch den zertifizierten Datensatz 4, insbesondere vollständig, definiert sein bzw. werden.

Der zertifizierte Datensatz 4 kann als prozessspezifischen Parameter alternativ oder ergänzend wenigstens einen eine Aufteilung des additiv zu fertigenden Bauteils 2 in einzelne, jeweils einen Querschnitt des additiv zu fertigenden Bauteils 2 beinhaltende Schichten beschreibenden Schichtparameter (Slice-Parameter), wie z. B. Schichtanzahl, Schichtdicke, Schichtfläche, etc., insbesondere alle eine Aufteilung des additiv zu fertigenden Bauteils 2 in einzelne, jeweils einen Querschnitt des additiv zu fertigenden Bauteils 2 beinhaltenden Schichten beschreibende Schichtparameter, beinhalten. Die Schichtparameter (Slice-Parameter) können sonach durch den zertifizierten Datensatz 4, insbesondere vollständig, definiert sein bzw. werden.

Der zertifizierte Datensatz 4 kann als prozessspezifischen Parameter alternativ oder ergänzend wenigstens einen Parameter, insbesondere einen geometrisch-konstruktiven Parameter und/oder einen Anordnungs- und/oder Ausrichtungsparameter relativ zu einem zu stützenden additiv zu fertigenden oder gefertigten Bauteil 2, wenigstens eines zur Unterstützung des additiv zu fertigenden oder gefertigten Bauteils 2 dienenden Stützelements (Supportelements), insbesondere alle Parameter wenigstens eines zur Unterstützung des additiv zu fertigenden oder gefertigten Bauteils 2 dienenden Stützelements, beinhalten. Die Parameter wenigstens eines zur Unterstützung des additiv zu fertigenden oder gefertigten Bauteils 2 dienenden Stützelements (Supportelements) können sonach durch den zertifizierten Datensatz 4, insbesondere vollständig, definiert sein bzw. werden.

Der zertifizierte Datensatz 4 kann als prozessspezifischen Parameter alternativ oder ergänzend wenigstens einen eine Baustrategie, d. h. insbesondere eine Baumaterialaufbringstrategie, eine Belichtungs- oder Bestrahlungsstrategie, etc., des additiv zu fertigenden Bauteils 2 beschreibenden Baustrategieparameter, insbesondere alle eine Baustrategie des additiv zu fertigenden Bauteils 2 beschreibenden Baustrategieparameter, beinhalten. Die Baustrategieparameter des additiv zu fertigenden Bauteils 2 beschreibenden Baustrategieparameter können sonach durch den zertifizierten Datensatz 4, insbesondere vollständig, definiert sein bzw. werden.

Der zertifizierte Datensatz 4 kann, wie erwähnt, wenigstens einen, insbesondere alle, geometrisch-konstruktiven Parameter wenigstens eines zur Unterstützung des additiv zu fertigenden oder gefertigten Bauteils 2 dienenden Stützelements (Supportelements) als prozessspezifischen Parameter beinhalten. Dabei kann das wenigstens eine Stützelement mit wenigstens einem ein Entfernen des wenigstens einen Stützelements von dem additiv gefertigten Bauteil 2 erleichternden Strukturelement, insbesondere einer, z. B. durch eine Sollbruchstelle realisierten, Schwächung des wenigstens einen Stützelements, und/oder mit einer das zu entfernende Stützelement, z. B. farblich, von dem additiv gefertigten Bauteil 2 abhebenden, optisch hervorhebenden Kennzeichnung, versehen sein bzw. werden. In dem zertifizierten Datensatz 4 können sonach im Zusammenhang mit entsprechenden auszubildenden Strukturelementen auch Informationen enthalten sein, welche die spätere Handhabung, d. h. insbesondere die Entfernung von Stützelementen, eines auf Grundlage des zertifizierten Datensatzes 4 additiv gefertigten Bauteils 2 betreffen, als diese das, insbesondere additive, Ausbilden entsprechender Strukturelemente beinhalten.

In einem Ausführungsbeispiel kann ein Vergleichen wenigstens eines im Rahmen der additiven Fertigung des additiv zu fertigenden Bauteils 2 definierter Bauteileigenschaften vermittels einer, z. B. optischen, Erfassungseinrichtung 7 erfassten, die additive Fertigung des additiv zu fertigenden Bauteils 2 betreffenden Parameters P mit wenigstens einem, insbesondere korrespondierenden, Referenzparameter RP, bei welchem es sich insbesondere um einen durch den zertifizierten Datensatz 4 beschriebenen anlagenspezifischen Parameter und/oder bauteilspezifischen Parameter und/oder prozessspezifischen Parameter handelt, erfolgen. Mithin kann ein aktuell durchgeführter additiver Fertigungsprozess, insbesondere in Echtzeit, gegen einen durch den zertifizierten Datensatz 4 beschriebenen additiven Fertigungsprozess geprüft werden. Derart kann eine Überwachung eines auf Grundlage des zertifizierten Datensatzes 4 erfolgenden additiven Fertigungsprozesses realisiert werden.

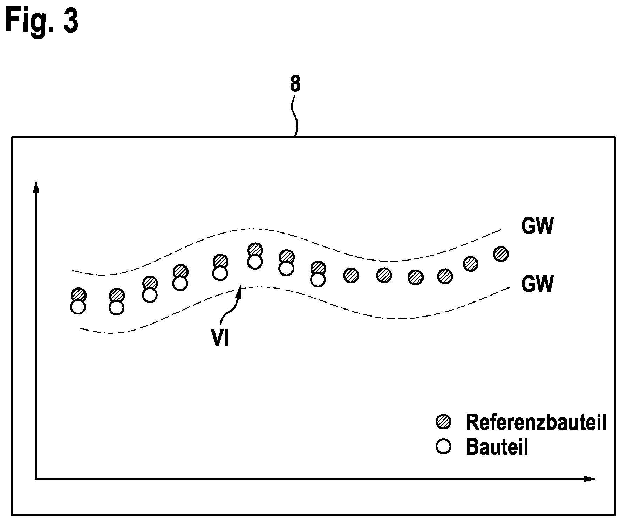

In diesem Ausführungsbeispiel kann ferner ein Auswerten der Vergleichsinformation VI im Hinblick auf wenigstens ein Auswertekriterium, insbesondere dahin, ob dieses eine Über- oder Unterschreitung wenigstens eines parameterspezifischen Grenzwerts oder Grenzwertbereichs anzeigt, und ein Erzeugen einer das jeweilige Auswerteergebnis beschreibenden Auswerteinformation erfolgen. Die Auswerteinformation kann insbesondere angeben, ob bzw. inwieweit das additiv gefertigte Bauteil 2 wenigstens einem, insbesondere durch den wenigstens einen Grenzwert GW oder Grenzwertbereich definierten, Auswertekriterium genügt oder nicht genügt. Das Ausgeben kann, wie Fig. 3 beispielhaft zeigt, über ein Ausgaben einer entsprechenden Auswerteinformation an einer, insbesondere akustischen und/oder optischen und/oder haptischen, Ausgabeeinrichtung 8, d. h. z. B. einem Display, und/oder über ein datenmäßiges Übertragen einer entsprechenden Auswerteinformation an wenigstens einen Kommunikationspartner erfolgen.

In einem Ausführungsbeispiel kann der zertifizierte Datensatz 4 bereitstellerseitig erzeugt werden bzw. worden sein. Dabei kann der zertifizierte Datensatz 4 seitens des Bereitstellers z. B. auf Grundlage von Informationen des Bereitstellers, insbesondere auf Grundlage von seitens des Bereitstellers, bevorzugt unter definierten Fertigungsbedingungen, gegebenenfalls empirisch bzw. iterativ gewonnenen, Fertigungsergebnissen eines dem additiv zu fertigenden Bauteil 2 entsprechenden Referenzbauteils, erzeugt werden oder worden sein. Der zertifizierte Datensatz 4 kann sonach auf der additiven Fertigung eines Referenzbauteils mit definierten Bauteileigenschaften, welche (exakt) den Bauteileigenschaften eines verfahrensgemäß zu fertigenden Bauteils 2 entsprechen, basieren. Mithin können diejenigen anlagenspezifischen Parameter und/oder bauteilspezifischen Parameter und/oder prozessspezifischen Parameter, auf Grundlage welcher ein bestimmtes Referenzbauteil definierter Bauteileigenschaften zuverlässig und reproduzierbar gefertigt wurde, d. h. insbesondere alle anlagenspezifischen Parameter und/oder bauteilspezifischen Parameter und/oder prozessspezifischen Parameter, auf Grundlage welcher ein bestimmtes Referenzbauteil definierter Bauteileigenschaften zuverlässig und reproduzierbar gefertigt wurde, als zertifizierter Datensatz 4 für die additive Fertigung eines dem Referenzbauteil (exakt) entsprechenden additiv zu fertigenden Bauteils 2 verwendet werden bzw. in dem wenigstens einen zertifizierten Datensatz 4 enthalten sein. Mit anderen Worten können die in dem zertifizierten Datensatz 4 enthaltenen anlagenspezifischen Parameter und/oder bauteilspezifischen Parameter und/oder prozessspezifischen Parameter als im Rahmen der additiven Fertigung eines bestimmten Referenzbauteils definierter Bauteileigenschaften unter bestimmten - typischerweise ebenso durch den zertifizierten Datensatz 4 abgebildeten - anlagenspezifischen und/oder bauteilspezifischen und/oder prozessspezifischen Gegebenheiten erprobte Parameter erachtet werden. Hieraus ergibt sich der bereits erwähnte Aspekt, dass ein Nutzer des Verfahrens keine eigene Erarbeitung entsprechender Parameter vornehmen muss, welche ihm eine zuverlässige und reproduzierbare additive Fertigung eines jeweiligen Bauteils 2 definierter Bauteileigenschaften ermöglichen, da sämtliche Parameter bereits in dem dem additiven Fertigungsprozess zugrunde zulegenden zertifizierten Datensatz 4 enthalten sind.

In einem weiteren Ausführungsbeispiel kann der zertifizierte Datensatz 4 jedoch ursprünglich auch durch einen Nutzer bzw. einen Dritten - hierbei handelt es sich um eine natürliche oder juristische Person, welche als externer Dienstleister entsprechende Datensätze bereitstellt, ohne eigens additive Bauteile 2 fertigen zu wollen - erzeugt werden bzw. worden sein. Es ist demnach denkbar, dass der zertifizierte Datensatz 4 seitens des Nutzers bzw. des Dritten auf Grundlage von Informationen des Nutzers bzw. des Dritten, insbesondere auf Grundlage seitens des Nutzers bzw. des Dritten, bevorzugt unter definierten Fertigungsbedingungen, gegebenenfalls empirisch bzw. iterativ gewonnenen, Fertigungsergebnissen eines dem additiv zu fertigenden Bauteil 2 (exakt) entsprechenden Referenzbauteils, erzeugt wird oder wurde.

In diesem Ausführungsbeispiel werden die seitens des Nutzers bzw. des Dritten als (potentieller) zertifizierter Datensatz bereitgestellten Informationen durch den Bereitsteller jedoch im Hinblick auf wenigstens ein bereitstellerseitig vorgebbares oder vorgegebenes Autorisierungskriterium, d. h. z. B. ein Sicherheitskriterium, Qualitätskriterium, etc., geprüft und nur bei positiver Autorisierung durch den Bereitsteller als zertifizierter Datensatz autorisiert. Hierzu kann eine hardware- und/oder softwaremäßig implementierte Autorisierungseinrichtung 9 verwendet werden.

In einem Ausführungsbeispiel kann das Prüfen kann ein Vergleichen wenigstens eines in dem zu autorisierenden Datensatz enthaltenen anlagenspezifischen Parameters und/oder bauteilspezifischen Parameters und/oder prozessspezifischen Parameters mit wenigstens einem, insbesondere jeweilig korrespondierenden, anlagenspezifischen und/oder bauteilspezifischen und/oder prozessspezifischen Referenzparameter sowie ein Erzeugen einer das jeweilige Vergleichsergebnis beschreibenden Vergleichsinformation umfassen.

In einem Ausführungsbeispiel kann das Autorisieren weiterhin ein Auswerten der Vergleichsinformation im Hinblick auf wenigstens ein Auswertekriterium, insbesondere dahin, ob dieses eine Über- oder Unterschreitung wenigstens eines parameterspezifischen Grenzwerts oder Grenzwertbereichs anzeigt, umfassen. Beispielsweise kann ein bauteilspezifischer Grenzwert bzw. Grenzwertbereich bestimmte geometrisch-konstruktive, chemische und/oder physikalische Eigenschaften betreffen, wobei ein Autorisieren nur bei deren Einhaltung erfolgt. Durch einen entsprechenden Grenzwert bzw. Grenzwertbereich kann ein zu erfüllendes Sicherheits- bzw. Qualitätskriterium definiert werden.

In einem Ausführungsbeispiel kann das Autorisieren im Weiteren ein Ausgeben wenigstens einer das Auswerte- bzw. Autorisierungsergebnis beschreibenden Auswerte- bzw. Autorisierungsinformation umfassen. Das Ausgeben einer entsprechenden Auswerte- bzw. Autorisierungsinformation kann über eine, insbesondere akustische und/oder optische und/oder haptische, Ausgabeeinrichtung 8, d. h. z. B. einem Display, und/oder über ein datenmäßiges Übertragen einer entsprechenden Auswerte- bzw. Autorisierungsinformation an wenigstens einen Kommunikationspartner erfolgen.

In einem weiteren Ausführungsbeispiel kann der zertifizierte Datensatz 4 eine bestimmte Anzahl, insbesondere eine Maximalanzahl, an auf Grundlage des zertifizierten Datensatzes 4 vermittels einer bestimmten additiven Fertigungsvorrichtung 5 möglichen additiven Fertigungsvorgängen beinhalten. In dem zertifizierten Datensatz 4 kann sonach bestimmt sein, wie viele additiv zu fertigende Bauteile 2 auf Grundlage des zertifizierten Datensatzes 4 maximal additiv gefertigt werden können. Der zertifizierte Datensatz 4 kann hardware- und/oder softwaretechnisch demnach so konfiguriert sein, dass mit diesem nur eine bestimmte Anzahl an Bauteilen 2 definierter Bauteileigenschaften gefertigt werden können. Derart verfügt der Bereitsteller über eine Kontrollmöglichkeit im Zusammenhang mit der Nutzung des zertifizierten Datensatzes 4, was ebenso eine probate Maßnahme gegen eine unautorisierte Verwendung des zertifizierten Datensatzes 4 darstellen kann.

In einem weiteren Ausführungsbeispiel kann der zertifizierte Datensatz 4, insbesondere die darin enthaltenen anlagenspezifischen Parameter und/oder bauteilspezifischen Parameter und/oder prozessspezifischen Parameter, von einem Nutzer nicht veränderbar sein. Der zertifizierte Datensatz 4 kann hardware- und/oder softwaretechnisch demnach so konfiguriert sein, d. h. insbesondere vor nutzerseitigen Veränderungen geschützt sein, dass ein Nutzer keine Änderungen an dem zertifizierten Datensatz 4 vornehmen kann. Dies kann z. B. über einen Schreibschutz der in dem zertifizierten Datensatz 4 enthaltenen Parameter realisiert sein. Der zertifizierte Datensatz 4 kann derart vor ungewünschten Manipulationen geschützt werden.

In einem weiteren Ausführungsbeispiel kann der zertifizierte Datensatz 4 verschlüsselt sein bzw. werden. Der zertifizierte Datensatz 4 kann hardware- und/oder softwaretechnisch demnach so konfiguriert sein, dass ein Schlüssel erforderlich ist, um diesen zu nutzen. Ein Nutzer kann den zertifizierten Datensatz 4 sonach nur nutzen, wenn er über einen entsprechenden Schlüssel zum Entschlüsseln verfügt. Ein entsprechender Schlüssel kann durch den Bereitsteller an einen Nutzer bereitgestellt werden. Die Bereitstellung eines entsprechenden Schlüssels kann mit dem Vorliegen einer einen erfolgreichen Bezahlvorgang eines Nutzers beschreibenden Bezahlinformation verknüpft sein.

Der zertifizierte Datensatz 4 wird durch den Bereitsteller auf einem mit wenigstens einem durch den Pfeil 11 lediglich schematisch angedeuteten Kommunikationsnetzwerk verbindbaren oder verbundenen Datenspeicher 10, insbesondere einem Server, gegebenenfalls einem Cloud-Server, bereitgestellt, von welchem er von einem Nutzer abgerufen werden kann oder wird. Ein entsprechender Datenspeicher 10 kann dem Bereitsteller zugeordnet sein; ein entsprechender Datenspeicher 10 kann sonach im Bereich einer bereitstellerseitig verwalteten Daten- bzw. Kommunikationsinfrastruktur vorhanden sein. Bei dem Kommunikationsnetzwerk 11 kann es sich um ein globales oder um ein lokales Kommunikationsnetzwerk, mithin z. B. um das Internet oder um ein Intranet, handeln. Durch das Bereitstellen des zertifizierten Datensatzes 4 auf einem entsprechenden Datenspeicher 10 kann einem Nutzer grundsätzlich unabhängig von Ort und Zeit ein Abruf ermöglicht werden. Jedwede zwischen dem Datenspeicher 10 und dem Nutzer hergestellte Kommunikationsverbindung kann verschlüsselt sein.

In einem weiteren Ausführungsbeispiel kann das Abrufen des zertifizierten Datensatzes 4 von dem wenigstens einen Datenspeicher 10 über eine, gegebenenfalls nutzerindividuell konfigurierbare bzw. konfigurierte, datenspeicherseitige Benutzeroberfläche bzw. -schnittstelle erfolgen. Der Zugang zu einer entsprechenden Benutzeroberfläche bzw. -schnittstelle kann durch einen Loginvorgang eines Nutzers erfolgen. Sämtliche nutzerseitigen Interaktionen mit dem Datenspeicher 10 können z. B. über in nutzerseitigen (portablen) Endgeräten, wie z. B. Computer, Laptop, Smartphone, Tablet-PC, Smartwatch, Smartbrille, etc., implementierten web-basierte Anwendungen, wie z. B. bestimmte Software (Apps), Browser, etc., erfolgen.

In einem weiteren Ausführungsbeispiel kann der zertifizierte Datensatz 4 von einem Nutzer (nur) abgerufen werden, sofern, insbesondere datenspeicherseitig, eine einen (erfolgreichen) Bezahlvorgang des Nutzers beschreibende Bezahlinformation vorliegt. Ein Bezahlvorgang kann ein Bezahlvorgang für einen einmaligen Zugriff auf den Datenspeicher 10 zum Abruf wenigstens eines bestimmten zertifizierten Datensatzes 4 sein. Ein Bezahlvorgang kann jedoch - im Sinne eines Abonnements - auch ein Bezahlvorgang für einen mehrmaligen Zugriff auf den Datenspeicher 10 zum Abruf wenigstens eines bestimmten zertifizierten Datensatzes 4 innerhalb eines bestimmten Zeitraums, d. h. z. B. wenigstens einer Stunde, wenigstens eines Tags, wenigstens eines Monats, wenigstens eines Jahrs, etc., sein.

Ein Bezahlvorgang kann prinzipiell auf jedwede Weise vorgenommen werden. Der Nutzer kann Bezahlvorgänge z. B. konventionell durch Überweisen eines bestimmten Geldbetrags auf ein Geldkonto des Bereitstellers oder über geeignete Bezahldienste an einen virtuellen Zahlungsempfänger, d. h. z. B. über ein Internet-Zahlungsportal, vornehmen. Es ist auch denkbar, dass ein entsprechender Bezahldienst z. B., gegebenenfalls als eigenes Nutzersubmenü, in eine datenspeicherseitige Benutzeroberfläche bzw. -schnittstelle integriert ist. Ein entsprechender Bezahldienst kann alternativ oder ergänzend z. B. auch als Software ("App") für ein benutzerseitiges (portables) Endgerät, z. B. Computer, Laptop, Smartphone, Tablet-PC, Smartwatch, Smartbrille, etc., implementiert sein.

Der zertifizierte Datensatz 4 wird auf ein nutzerseitiges Zugriffsportal 12 abgerufen bzw. auf einem solchen abgespeichert, von welchem er wiederum auf eine nutzerseitige additive Fertigungseinrichtung 5 abrufbar ist. Mithin kann sich ein Nutzer - insoweit unabhängig von dem Bereitsteller - in einer eigenen nutzerseitig verwalteten Daten- bzw. Kommunikationsinfrastruktur ein Zugriffsportal 12 einrichten, von welchem zertifizierte Datensätze 4 auf wenigstens eine nutzerseitige additive Fertigungseinrichtung 5 abgerufen werden können. Über das nutzerseitige Zugriffsportal 12 können sonach (nur) solche zertifizierten Datensätze 4 bereitgestellt und abgerufen werden, welche für den jeweiligen Nutzer, z. B. aufgrund eines bestimmten Bauteilprogramms in technischen Einrichtungen des Nutzers, relevant sind. Beispielsweise können über ein Zugriffsportal 12 eines Nutzers aus dem Bereich der Verpackungstechnik nur solche zertifizierten Datensätze bereitgestellt und abgerufen werden, welche in den Verpackungsmaschinen des Nutzers tatsächlich verbaute Bauteile 2 betreffen. Ein entsprechendes Zugriffsportal 12 kann als, gegebenenfalls web-basierte, Plug-In-Lösung für eine nutzerseitig verwaltete Daten- bzw. Kommunikationsinfrastruktur vorliegen, sodass eine nutzerseitig verwaltete verwalteten Daten- bzw. Kommunikationsinfrastruktur auf einfache Weise um ein entsprechendes Zugriffsportal 12 erweitert werden kann.

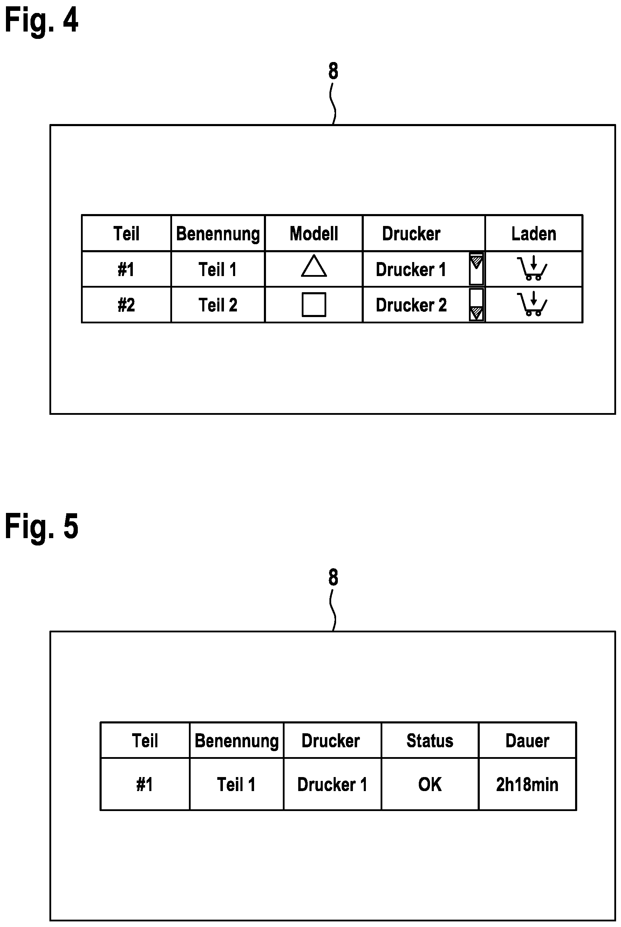

Ein Ausführungsbeispiel einer beispielhaften Benutzeroberfläche eines entsprechenden Zugriffsportals 12 ist in Fig. 4 dargestellt. Insbesondere ist dabei eine mögliche tabellenartige Darstellung der additiv fertigbaren Bauteile 2 (erste Spalte von links), der zugehörigen Bauteilbezeichnungen (zweite Spalte von links), der zugehörigen Modelle (dritte Spalte von links), der verfüggaren additiven Fertigungseinrichtungen 5 ("Drucker") (vierte Spalte von links) sowie die Möglichkeit des Herunterladens der jeweiligen zertifizierten Datensätze 4 auf eine jeweilige additive Fertigungseinrichtung 5 (fünfte Spalte von links) beispielhaft dargestellt. Im Zusammenhang mit der die Auswahl einer additiven Fertigungseinrichtung 5 betreffenden Spalte ist exemplarisch zu ergänzen, dass Drop-Down-Menüs implementiert werden können, über welche ein Nutzer eine Auswahl - hier einer additiven Fertigungseinrichtung 5 - vornehmen kann.

In einem weiteren Ausführungsbeispiel kann der auf einem nutzerseitigen Zugriffsportal 12 abgespeicherte zertifizierte Datensatz 4, auf eine additive Fertigungseinrichtung 5 eines Kunden des Nutzers abrufbar sein. Dies kann wiederum an das Vorliegen einer einen Bezahlvorgang eines Kunden des Nutzers an den Nutzer und/oder Bereitsteller beschreibenden Bezahlinformation geknüpft sein bzw. werden.

In einem weiteren Ausführungsbeispiel kann der zertifizierte Datensatz 4 und/oder ein nutzerseitiges Zugriffsportal 12, insbesondere als, gegebenenfalls web-basierte, Plug-In-Lösung, auf einem portablen, an einen Nutzer aushändigbaren oder ausgehändigten, insbesondere kommunikations- bzw. netzwerkfähigen, Datenträger, wie z. B. einem USB-Stick, CD-ROM, Speicherkarte, etc., bereitgestellt werden, von welchem er von einem Nutzer abgerufen wird oder werden kann.

Ein entsprechender kommunikations- bzw. netzwerkfähiger Datenträger kann eingerichtet sein, den additiven Fertigungsprozess betreffende Daten, d. h. z. B. Statusdaten, Fehlerdaten, etc. an einen Kommunikationspartner, d. h. z. B. den Bereitsteller, zu übertragen. Die Übertragung dieser Daten kann wiederum verschlüsselt erfolgen.

Ein entsprechender Datenträger kann an einen Nutzer ausgehändigt werden, sofern eine einen Bezahlvorgang des Nutzers beschreibende Bezahlinformation vorliegt. Die vorstehenden Ausführungen im Zusammenhang mit entsprechenden Bezahlinformationen und Bezahlvorgängen gelten analog.

In einem weiteren Ausführungsbeispiel kann im Rahmen des Anwendens des wenigstens einen additiven Fertigungsprozesses zur additiven Fertigung des Bauteils 2 definierter Bauteileigenschaften auf Grundlage des zertifizierten Datensatzes 4 auf einer, insbesondere bereitstellerseitigen und/oder nutzerseitigen, Ausgabeeinrichtung 8 wenigstens eine den Status des jeweiligen additiven Fertigungsprozesses betreffende Statusanzeige erzeugt und ausgegeben werden. Eine entsprechende Statusanzeige ermöglicht, gegebenenfalls in Echtzeit, eine Überwachung eines auf Grundlage des zertifizierten Datensatzes 4 durchgeführten additiven Fertigungsprozesses.

Ein Ausführungsbeispiel einer entsprechenden Statusanzeige ist in Fig. 5 beispielhaft dargestellt. Insbesondere ist dabei eine mögliche tabellenartige Darstellung des additiv zu fertigenden Bauteils 2 (erste Spalte von links), der zugehörigen Bauteilbezeichnung (zweite Spalte von links), die zugehörige Bezeichnung einer eingesetzten additiven Fertigungseinrichtung 5 (dritte Spalte von links), des zugehörigen Status (vierte Spalte von links) sowie die Restdauer des additiven Fertigungsprozesses (fünfte Spalte von links) beispielhaft dargestellt.

Einzelne, mehrere oder sämtliche im Zusammenhang mit einem bestimmten Ausführungsbeispiel beschriebenen Merkmale können mit einzelnen, mehreren oder sämtlichen Merkmale wenigstens eines anderen Ausführungsbeispiels beliebig kombiniert werden.

## Patentansprüche

1. Verfahren zur additiven Fertigung wenigstens eines Bauteils (2), insbesondere eines Ersatz- oder Nachrüstteils einer Verpackungsanlage zur Verpackung von Drittgegenständen, definierter Bauteileigenschaften, vermittels wenigstens einer additiven Fertigungseinrichtung (5) eines Nutzers, wobei das Verfahren **gekennzeichnet ist durch**:
- Bereitstellen wenigstens eines zertifizierten Datensatzes (4) von einem Bereitsteller, wobei der Bereitsteller den wenigstens einen zertifizierten Datensatz (4) auf einem mit wenigstens einem Kommunikationsnetzwerk verbundenen Datenspeicher (10) bereitstellt, von welchem der wenigstens eine zertifizierte Datensatz von dem Nutzer abgerufen wird,
wobei der wenigstens eine zertifizierte Datensatz (4) von dem Bereitsteller für einen additiven Fertigungsprozess wenigstens eines bestimmten Bauteils (2) definierter Bauteileigenschaften zertifizierte bauteilspezifische Parameter und/oder anlagenspezifische Parameter und/oder prozessspezifische Parameter beinhaltet, wobei der wenigstens eine zertifizierte Datensatz (4) maschinenlesbare Steuerinformationen zur vollautomatischen Steuerung des Betriebs der wenigstens einen additiven Fertigungseinrichtung (5) zur additiven Fertigung des wenigstens einen additiv zu fertigenden Bauteils (2) auf Grundlage des wenigstens einen zertifizierten Datensatzes (4) beinhaltet,
wobei es sich bei entsprechenden Steuerinformationen um einen jeweiligen Maschinencode einer jeweiligen additiven Fertigungseinrichtung handelt, beinhaltet, wobei der wenigstens eine zertifizierte Datensatz (4), insbesondere dessen Inhalt, von einem Nutzer nicht veränderbar ist;
- Durchführen wenigstens eines additiven Fertigungsprozesses vermittels der wenigstens einen additiven Fertigungseinrichtung (5) des Nutzers zur additiven Fertigung des wenigstens einen Bauteils (2) definierter Bauteileigenschaften auf Grundlage des wenigstens einen zertifizierten Datensatzes (4), wobei
der wenigstens eine zertifizierte Datensatz (4) auf ein nutzerseitiges Zugriffsportal abgerufen oder auf einem solchen abgespeichert wird, von welchem er auf die wenigstens eine nutzerseitige additive Fertigungseinrichtung (5) abgerufen wird,
wobei der wenigstens eine additive Fertigungsprozess zur Fertigung des Bauteils (2) definierter Bauteileigenschaften ohne nutzerseitigen Eingriff allein auf Grundlage der in dem wenigstens einen zertifizierten Datensatzes (4) enthaltenen Steuerinformationen durchgeführt wird.

2. Verfahren nach Anspruch 1, umfassend Bereitstellen des oder wenigstens eines zertifizierten Datensatzes (4'), welcher von einem Bereitsteller für die Vorbereitung eines additiven Fertigungsprozesses des oder wenigstens eines additiv zu fertigenden Bauteils (2) definierter Bauteileigenschaften zertifizierte anlagenspezifische Parameter und/oder bauteilspezifische Parameter und/oder prozessspezifische Parameter beinhaltet,
- Anwenden wenigstens einer Maßnahme zur Vorbereitung des oder wenigstens eines additiven Fertigungsprozesses zur additiven Fertigung des wenigstens einen additiv zu fertigenden Bauteils (2) definierter Bauteileigenschaften auf Grundlage des wenigstens einen zertifizierten Datensatzes (4'), wobei die die wenigstens eine Maßnahme zur Vorbereitung des additiven Fertigungsprozesses insbesondere eine Maßnahme zur Vorbereitung eines im Rahmen des zur additiven Fertigung eines Bauteils (2) bestimmter Bauteileigenschaften durchgeführten additiven Fertigungsprozesses zu verwendenden Baumaterials eine Temperierung und/oder Trocknung und/oder Inertisierung des Baumaterials umfasst; und/oder
Bereitstellen des oder wenigstens eines zertifizierten Datensatzes (4"), welcher von einem Bereitsteller für die Nachbereitung des oder wenigstens eines additiven Fertigungsprozesses wenigstens eines additiv gefertigten Bauteils (2) definierter Bauteileigenschaften zertifizierte anlagenspezifische Parameter und/oder bauteilspezifische Parameter und/oder prozessspezifische Parameter beinhaltet,
- Anwenden wenigstens einer Maßnahme zur Nachbereitung des oder wenigstens eines additiven Fertigungsprozesses zur additiven Fertigung des wenigstens einen additiv gefertigten Bauteils (2) definierter Bauteileigenschaften auf Grundlage des wenigstens einen zertifizierten Datensatzes (4"), wobei die wenigstens eine Maßnahme zur Nachbereitung des additiven Fertigungsprozesses insbesondere eine Maßnahme zur Nachbearbeitung des im Rahmen des additiven Fertigungsprozesses additiv gefertigten Bauteils (2) eine mechanische und/oder thermische Nachbehandlung des additiv gefertigten Bauteils (2) umfasst.

3. Verfahren nach einem der vorhergehenden Ansprüche, wobei ein zertifizierter Datensatz bereitgestellt wird, welcher
- wenigstens einen geometrisch-konstruktiven Parameter des wenigstens einen additiv zu fertigenden Bauteils (2), insbesondere alle geometrisch-konstruktiven Parameter des wenigstens einen additiv zu fertigenden Bauteils (2), als bauteilspezifischen Parameter beinhaltet, und/oder
- wenigstens einen chemischen Parameter des wenigstens einen additiv zu fertigenden Bauteils (2), insbesondere alle chemischen Parameter des wenigstens einen additiv zu fertigenden Bauteils (2), als bauteilspezifischen Parameter beinhaltet, und/oder
- wenigstens einen physikalischen Parameter des wenigstens einen additiv zu fertigenden Bauteils (2), insbesondere alle physikalischen Parameter des wenigstens einen additiv zu fertigenden Bauteils (2), als bauteilspezifischen Parameter beinhaltet.

4. Verfahren nach einem der vorhergehenden Ansprüche, wobei ein zertifizierter Datensatz bereitgestellt wird, welcher
- wenigstens einen Abmessungsparameter wenigstens eines Baufelds wenigstens einer zur additiven Fertigung des wenigstens einen additiv zu fertigenden Bauteils (2) zu verwendenden oder verwendeten additiven Fertigungseinrichtung (5), insbesondere alle Abmessungsparameter wenigstens eines Baufelds wenigstens einer zur additiven Fertigung des wenigstens einen additiv zu fertigenden Bauteils (2) zu verwendenden oder verwendeten additiven Fertigungseinrichtung (5), als anlagenspezifischen Parameter beinhaltet, und/oder
- wenigstens einen Abmessungsparameter wenigstens eines Bauvolumens wenigstens einer zur additiven Fertigung des wenigstens einen additiv zu fertigenden Bauteils (2) zu verwendenden oder verwendeten additiven Fertigungseinrichtung (5), insbesondere alle Abmessungsparameter wenigstens eines Bauvolumens wenigstens einer zur additiven Fertigung des wenigstens einen additiv zu fertigenden Bauteils (2) zu verwendenden oder verwendeten additiven Fertigungseinrichtung (5), als anlagenspezifischen Parameter beinhaltet, und/oder
- wenigstens einen Fertigungsparameter, insbesondere einen Bauratenparameter, wenigstens einer zur additiven Fertigung des wenigstens einen additiv zu fertigenden Bauteils (2) zu verwendenden oder verwendeten additiven Fertigungseinrichtung (5), insbesondere alle Fertigungsparameter wenigstens einer zur additiven Fertigung des wenigstens einen additiv zu fertigenden Bauteils (2) zu verwendenden oder verwendeten additiven Fertigungseinrichtung (5), als anlagenspezifischen Parameter beinhaltet,
- wenigstens einen Anlagentypparameter, insbesondere einen Hersteller- und/oder Modellparameter, wenigstens einer zur additiven Fertigung des wenigstens einen additiv zu fertigenden Bauteils (2) zu verwendenden oder verwendeten additiven Fertigungseinrichtung (5), insbesondere alle Anlagentypparameter wenigstens einer zur additiven Fertigung des wenigstens einen additiv zu fertigenden Bauteils (2) zu verwendenden oder verwendeten additiven Fertigungseinrichtung (5), als anlagenspezifischen Parameter beinhaltet.

5. Verfahren nach einem der vorhergehenden Ansprüche, wobei ein zertifizierter Datensatz bereitgestellt wird, welcher
- wenigstens einen Baumaterialparameter wenigstens eines Baumaterials, welches von wenigstens einer zur additiven Fertigung des wenigstens einen additiv zu fertigenden Bauteils (2) zu verwendenden oder verwendeten additiven Fertigungseinrichtung (5) zur additiven Fertigung einsetzbar ist, insbesondere alle Baumaterialparameter wenigstens eines Baumaterials welches von wenigstens einer zur additiven Fertigung des wenigstens einen additiv zu fertigenden Bauteils (2) zu verwendenden oder verwendeten additiven Fertigungseinrichtung (5) zur additiven Fertigung einsetzbar ist, als prozessspezifischen Parameter beinhaltet, und/oder
- wenigstens einen chemischen Prozessparameter, insbesondere chemische Atmosphäre, innerhalb wenigstens eines Bau- und/oder Prozessraums wenigstens einer zur additiven Fertigung des wenigstens einen additiv zu fertigenden Bauteils (2) zu verwendenden oder verwendeten additiven Fertigungseinrichtung (5), insbesondere alle chemischen Prozessparameter wenigstens eines Bau- und/oder Prozessraums wenigstens einer zur additiven Fertigung des wenigstens einen additiv zu fertigenden Bauteils (2) zu verwendenden oder verwendeten additiven Fertigungseinrichtung (5), als prozessspezifischen Parameter beinhaltet, und/oder
- wenigstens einen physikalischen Prozessparameter, insbesondere Feuchtigkeit, Druck, Temperatur, außerhalb und/oder innerhalb wenigstens eines Bau- und/oder Prozessraums wenigstens einer zur additiven Fertigung des wenigstens einen additiv zu fertigenden Bauteils (2) zu verwendenden oder verwendeten additiven Fertigungseinrichtung (5), insbesondere alle physikalischen Prozessparameter wenigstens eines Bau- und/oder Prozessraums wenigstens einer zur additiven Fertigung des wenigstens einen additiv zu fertigenden Bauteils (2) zu verwendenden oder verwendeten additiven Fertigungseinrichtung (5), als prozessspezifischen Parameter beinhaltet, und/oder
- wenigstens einen klimatischen Prozessparameter, insbesondere Feuchtigkeit, Druck, Temperatur, wenigstens einer Umgebung wenigstens einer zur additiven Fertigung des wenigstens einen additiv zu fertigenden Bauteils (2) zu verwendenden oder verwendeten additiven Fertigungseinrichtung (5), insbesondere alle klimatischen Prozessparameter wenigstens einer zur additiven Fertigung des wenigstens einen additiv zu fertigenden Bauteils (2) zu verwendenden oder verwendeten additiven Fertigungseinrichtung (5), als prozessspezifischen Parameter beinhaltet, und/oder
- wenigstens einen eine Aufteilung des wenigstens einen additiv zu fertigenden Bauteils (2) in einzelne, jeweils einen Querschnitt des wenigstens einen additiv zu fertigenden Bauteil (2) beinhaltenden Schichten beschreibenden Schichtparameter, insbesondere alle eine Aufteilung des wenigstens einen additiv zu fertigenden Bauteils (2) in einzelne, jeweils einen Querschnitt des wenigstens einen additiv zu fertigenden Bauteil (2) beinhaltenden Schichten beschreibende Schichtparameter, als prozessspezifischen Parameter beinhaltet, und/oder
- wenigstens einen Parameter, insbesondere einen geometrisch-konstruktiven Parameter und/oder einen Anordnungsparameter relativ zu einem zu stützenden additiv zu fertigenden oder gefertigten Bauteil (2), wenigstens eines zur Unterstützung des wenigstens einen additiv zu fertigenden oder gefertigten Bauteils dienenden Stützelements, insbesondere alle Parameter wenigstens eines zur Unterstützung des wenigstens einen additiv zu fertigenden oder gefertigten Bauteils (2) dienenden Stützelements, als prozessspezifischen Parameter beinhaltet, und/oder
- wenigstens einen eine Baustrategie des wenigstens einen additiv zu fertigenden Bauteils (2) beschreibenden Baustrategieparameter, insbesondere alle eine Baustrategie des wenigstens einen additiv zu fertigenden Bauteils (2) beschreibenden Baustrategieparameter, als prozessspezifischen Parameter beinhaltet.

6. Verfahren nach einem der vorhergehenden Ansprüche, wobei der zertifizierte Datensatz wenigstens einen geometrisch-konstruktiven Parameter wenigstens eines zur Unterstützung des wenigstens einen additiv zu fertigenden oder gefertigten Bauteils (2) dienenden Stützelements als prozessspezifischen Parameter beinhaltet, wobei das wenigstens eine Stützelement mit wenigstens einem ein Entfernen des wenigstens einen Stützelements von dem additiv gefertigten Bauteil (2) erleichternden Strukturelement, insbesondere einer Schwächung des wenigstens einen Stützelements, und/oder mit einer das zu entfernende Stützelement optisch hervorhebenden Kennzeichnung, versehen wird.

7. Verfahren nach einem der vorhergehenden Ansprüche, umfassend Vergleichen wenigstens eines im Rahmen der additiven Fertigung des wenigstens einen additiv zu fertigenden Bauteils (2) definierter Bauteileigenschaften vermittels einer Erfassungseinrichtung (7) erfassten, die additive Fertigung des wenigstens einen additiv zu fertigenden Bauteils (2) betreffenden Parameters mit wenigstens einem, insbesondere korrespondierenden, Referenzparameter; optional ferner umfassend Auswerten der Vergleichsinformation im Hinblick auf wenigstens ein Auswertekriterium, insbesondere dahin, ob dieses eine Über- oder Unterschreitung wenigstens eines parameterspezifischen Grenzwerts oder Grenzwertbereichs anzeigt.

8. Verfahren nach einem der vorhergehenden Ansprüche, wobei der wenigstens eine zertifizierte Datensatz (4) seitens des Bereitstellers auf Grundlage von Informationen des Bereitstellers, insbesondere auf Grundlage seitens des Bereitstellers, bevorzugt unter definierten Fertigungsbedingungen, gegebenenfalls empirisch gewonnenen, Fertigungsergebnissen eines dem additiv zu fertigenden Bauteil (2) entsprechenden Referenzbauteils, erzeugt wird oder wurde.

9. Verfahren nach einem der Ansprüche 1 bis 7, wobei der wenigstens eine zertifizierte Datensatz (4) seitens des Nutzers oder eines Dritten auf Grundlage von Informationen des Nutzers oder des Dritten, insbesondere auf Grundlage seitens des Nutzers oder des Dritten, bevorzugt unter definierten Fertigungsbedingungen, gegebenenfalls empirisch gewonnenen, Fertigungsergebnissen eines dem additiv zu fertigenden Bauteil (2) entsprechenden Referenzbauteils, erzeugt wird oder wurde, wobei die Informationen des Nutzers oder des Dritten durch den Bereitsteller im Hinblick auf wenigstens ein bereitstellerseitig vorgebbares oder vorgegebenes Autorisierungskriterium autorisiert werden und nur bei positiver Autorisierung durch den Bereitsteller als zertifizierter Datensatz (4) autorisiert werden.

10. Verfahren nach einem der vorhergehenden Ansprüche, wobei der wenigstens eine zertifizierte Datensatz (4) eine bestimmte Anzahl an auf Grundlage des wenigstens einen zertifizierten Datensatzes (4) vermittels einer bestimmten additiven Fertigungsvorrichtung (5) möglichen additiven Fertigungsvorgängen beinhaltet.

11. Verfahren nach einem der vorhergehenden Ansprüche, wobei der wenigstens eine zertifizierte Datensatz (4) verschlüsselt ist.

12. Verfahren nach einem der vorhergehenden Ansprüche, wobei das nutzerseitige Zugriffsportal (12), insbesondere als Plug-In-Lösung, auf einem portablen, an einen Nutzer aushändigbaren oder ausgehändigten Datenträger bereitgestellt wird, von welchem er von einem Nutzer abgerufen wird oder werden kann.

13. System (1) zur additiven Fertigung wenigstens eines Bauteils (2) definierter Bauteileigenschaften gemäß dem Verfahren nach einem der vorhergehenden Ansprüche, umfassend
- wenigstens eine einem Bereitsteller zugeordnete, einen mit wenigstens einem Kommunikationsnetzwerk verbundenen Datenspeicher (10) umfassende Bereitstellungseinrichtung (3), welche zum Bereitstellen wenigstens eines zertifizierten Datensatzes (4) auf dem mit wenigstens einem Kommunikationsnetzwerk verbundenen Datenspeicher (10), von welchem der wenigstens eine zertifizierte Datensatz (4) von einem Nutzer abgerufen werden kann, eingerichtet ist,
wobei der wenigstens eine zertifizierte Datensatz (4) von dem Bereitsteller für einen additiven Fertigungsprozess wenigstens eines bestimmten Bauteils (2) definierter Bauteileigenschaften zertifizierte bauteilspezifische Parameter und/oder anlagenspezifische Parameter und/oder prozessspezifische Parameter beinhaltet, wobei der wenigstens eine zertifizierte Datensatz (4) maschinenlesbare Steuerinformationen zur vollautomatischen Steuerung des Betriebs der wenigstens einen additiven Fertigungseinrichtung (5) zur additiven Fertigung des wenigstens einen additiv zu fertigenden Bauteils (2) auf Grundlage des wenigstens einen zertifizierten Datensatzes (4) beinhaltet,
wobei es sich bei entsprechenden Steuerinformationen um einen jeweiligen Maschinencode einer jeweiligen additiven Fertigungseinrichtung handelt, beinhaltet, wobei der wenigstens eine zertifizierte Datensatz (4), insbesondere dessen Inhalt, von einem Nutzer nicht veränderbar ist;
- wenigstens eine einem Nutzer zugeordnete additive Fertigungseinrichtung (5), welche zum Anwenden wenigstens eines additiven Fertigungsprozesses zur additiven Fertigung wenigstens eines Bauteils (2) definierter Bauteileigenschaften auf Grundlage des wenigstens einen zertifizierten Datensatzes (4) eingerichtet ist;
- ein nutzerseitiges Zugriffsportal, welches eingerichtet ist, dass der wenigstens eine zertifizierte Datensatz (4) auf dieses abrufbar oder dass der wenigstens eine zertifizierte Datensatz (4) auf diesem abgespeichert ist und welches eingerichtet, dass der wenigstens eine zertifizierte Datensatz (4) von diesem auf die wenigstens eine dem Nutzer zugeordnete additive Fertigungseinrichtung (5) abrufbar ist;
wobei die wenigstens eine dem Nutzer zugeordnete additiv Fertigungseinrichtung (5) eingerichtet ist, den wenigstens einen additiven Fertigungsprozess zur Fertigung des Bauteils (2) definierter Bauteileigenschaften ohne nutzerseitigen Eingriff allein auf Grundlage der in dem wenigstens einen zertifizierten Datensatzes (4) enthaltenen Steuerinformationen durchzuführen.

## Claims

1. Method for additive manufacturing of at least one component (2), in particular a replacement or retrofit part of a packaging system for packaging third-party objects, defined component properties, by means of at least one additive manufacturing device (5) of a user, wherein the method is **characterized by**:
- provide at least one certified data set (4) from a provider, wherein the provider provides at least one certified data set (4) on a data memory (10) connected to at least one communication network, from which the at least one certified data set is retrieved by the user,
wherein the at least one certified data set (4) certified by the provider for an additive manufacturing process of at least one particular component (2) defined component properties includes component-specific parameters and/or plant-specific parameters and/or process-specific parameters, wherein the at least one certified data set (4) includes machine-readable control information for fully automatic control of the operation of the at least one additive manufacturing device (5) for additive manufacturing of the at least one component (2) to be manufactured additively based on the at least one certified data set (4),
wherein the corresponding control information is a respective machine code of a respective additive manufacturing device, wherein the at least one certified data set (4), in particular its content, is not changeable by a user;
- performing at least one additive manufacturing process by means of the user's at least one additive manufacturing device (5) for additive manufacturing of at least one component (2) defined component properties on the basis of at least one certified data set (4), wherein
the at least one certified data set (4) is accessed or stored on a user-side access portal from which it is accessed on the at least one user-side additive manufacturing device (5), wherein the at least one additive manufacturing process for the production of the component (2) defined component properties without user intervention is carried out solely on the basis of the control information contained in the at least one certified data set (4).

2. Method of claim 1, comprising providing the or at least one certified data set (4"), which includes system-specific parameters and/or component-specific parameters and/or process-specific parameters certified by a provider for the preparation of an additive manufacturing process of the or at least one component (2) defined component properties to be manufactured additively,
- applying at least one measure for the preparation of the or at least one additive manufacturing process for the additive manufacturing of the at least one additively to be manufactured component (2) defined component properties on the basis of the at least one certified data set (4'), wherein the at least one measure for the preparation of the additive manufacturing process includes in particular a measure for the preparation of a building material to be used in the context of the additive manufacturing process of a component (2) to be performed for the additive manufacturing of a component (2) certain component properties, a temperature control and / or drying and / or inertization of the building material; and/or
providing the or at least one certified data set (4"), which includes system-specific parameters and/or component-specific parameters and/or process-specific parameters certified by a provider for the follow-up of the or at least one additive manufacturing process of at least one additively manufactured component (2) of defined component properties;
- applying at least one measure for the post-processing of the or at least one additive manufacturing process for the additive manufacturing of the at least one additively manufactured component (2) defined component properties on the basis of at least one certified data set (4"), wherein the at least one measure for the post-processing of the additive manufacturing process comprises in particular a measure for the post-processing of the additively manufactured component (2) a mechanical and / or thermal post-treatment of the additively manufactured component (2).

3. Method according to any one of the preceding claims, wherein a certified data set is provided, which
- includes at least one geometric-constructive parameter of the at least one component (2) to be manufactured additively, in particular all geometric-constructive parameters of the at least one component (2) to be manufactured additively, as component-specific parameters, and/or
- contains at least one chemical parameter of the at least one component (2) to be manufactured additively, in particular all chemical parameters of the at least one component (2) to be manufactured additively, as component-specific parameters, and/or
- contains at least one physical parameter of the at least one component (2) to be manufactured additively, in particular all physical parameters of the at least one component (2) to be manufactured additively, as component-specific parameters.

4. Method according to any one of the preceding claims, wherein a certified data set is provided, which
- at least one dimension parameter of at least one construction field of at least one additive manufacturing device (5) to be used or used for the additive manufacturing of at least one component (2) to be manufactured, in particular all dimension parameters of at least one construction field of at least one additive manufacturing device (5) to be used or used for the additive manufacturing of at least one component (2) to be manufactured, and/or
- includes at least one dimension parameter of at least one construction volume of at least one additive manufacturing device (5) to be used or used for the additive manufacturing of at least one component (2) to be manufactured additively, in particular all dimension parameters of at least one construction volume of at least one additive manufacturing device (5) to be used or used for the additive manufacturing of at least one component (2) to be manufactured additively, as plant-specific parameters, and/or
- includes at least one manufacturing parameter, in particular a construction rate parameter, at least one additive manufacturing device (5) to be used or used for additive manufacturing of at least one additively to be manufactured component (2), in particular all manufacturing parameters of at least one additive manufacturing device (5) to be used or used for additive manufacturing of at least one additively to be manufactured component (2), as plant-specific parameters,
- contains at least one plant type parameter, in particular a manufacturer and / or model parameter, at least one for additive manufacturing of the at least one additive to be manufactured component (2) to be used or used additive manufacturing device (5), in particular all plant type parameters of at least one for additive manufacturing of the at least one additive to be manufactured component (2) to be used or used additive manufacturing device (5), as plant-specific parameters.

5. Method according to any one of the preceding claims, wherein a certified data set is provided, which
- at least one building material parameter of at least one building material which can be used for additive manufacturing of at least one additive manufacturing component (2) to be used or used additive manufacturing device (5) for additive manufacturing, in particular all building material parameters of at least one building material which can be used for additive manufacturing of at least one additive manufacturing component (2) to be used or used additive manufacturing device (5) for additive manufacturing, as process-specific parameter, and/or
- contains at least one chemical process parameter, in particular chemical atmosphere, within at least one construction and / or process space at least one additive manufacturing device (5) to be used or used for additive manufacturing of at least one component to be manufactured (2), in particular all chemical process parameters of at least one construction and / or process space at least one additive manufacturing device (5) to be used or used for additive manufacturing of at least one component to be manufactured (2), as process-specific parameter, and / or
- includes at least one physical process parameter, in particular humidity, pressure, temperature, outside and/or within at least one construction and/or process space at least one additive manufacturing device (5) to be used or used for additive manufacturing of at least one component to be manufactured (2), in particular all physical process parameters of at least one construction and/or process space at least one additive manufacturing device (5) to be used or used for additive manufacturing of at least one component to be manufactured (2), as process-specific parameters, and/or
- includes at least one climatic process parameter, in particular humidity, pressure, temperature, at least one environment of at least one additive manufacturing device (5) to be used or used for the additive manufacturing of at least one additively to be manufactured component (2), in particular all climatic process parameters of at least one additive manufacturing device (5) to be used or used for the additive manufacturing of at least one additively to be manufactured component (2), as process-specific parameters, and/or
- at least one division of the at least one additively to be manufactured component (2) into individual, in each case a cross-section of the at least one additively to be manufactured component (2) comprising layers descriptive layer parameters, in particular all a division of the at least one additively to be manufactured component (2) into individual, in each case a cross-section of the at least one additively to be manufactured component (2) comprising layers descriptive layer parameters, as process-specific parameters, and / or
- includes at least one parameter, in particular a geometric-constructive parameter and / or an arrangement parameter relative to a component to be supported additively to be manufactured or manufactured (2), at least one supporting element serving to support the at least one supporting element serving to be manufactured or manufactured, in particular all parameters of at least one supporting element serving to support the at least one supporting element serving to be manufactured or manufactured (2) as a process-specific parameter, and / or
- contains at least one construction strategy of the at least one component (2) to be manufactured additively descriptive building strategy parameter, in particular all a construction strategy of the at least one component (2) to be manufactured additively descriptive building strategy parameter, as process-specific parameters.

6. Method according to any one of the preceding claims, wherein the certified data set includes at least one geometric-constructive parameter of at least one supporting element serving as process-specific parameter to support at least one component (2) to be manufactured or manufactured additively, wherein
which at least one supporting element is provided with at least one removal of at least one supporting element from the additively manufactured component (2) facilitating structural element, in particular a weakening of at least one supporting element, and / or with an optically highlighting marking of the supporting element to be removed.

7. Method according to one of the preceding claims, comprising comparison of at least one in the context of additive manufacturing of the at least one additively to be manufactured component (2) defined component properties by means of a detection device (7) detected, the additive manufacturing of the at least one additively to be manufactured component (2) parameter with at least one, in particular corresponding, reference parameter; optionally also comprehensively evaluate the comparative information with regard to at least one evaluation criterion, in particular to whether it indicates an overshoot or undershoot of at least one parameter-specific limit value or limit value range.

8. Method according to one of the preceding claims, wherein the at least one certified data set (4) is generated by the provider on the basis of information from the provider, in particular on the basis of the provider, preferably under defined manufacturing conditions, optionally empirically obtained, manufacturing results of a reference component corresponding to the additively to be manufactured (2).

9. Method according to any one of claims 1 to 7, wherein the at least one certified data set (4) is generated by the user or a third party on the basis of information from the user or the third party, in particular on the basis of the user or the third party, preferably under defined manufacturing conditions, optionally empirically obtained, production results of a reference component (2) corresponding to the additively to be manufactured component (2), wherein the information of the user or the third party are authorized by the provider with regard to at least one predetermined or predetermined authorization criterion and are authorized only if positive authorization by the provider as a certified data set (4).

10. Method according to one of the preceding claims, wherein the at least one certified data set (4) comprises a certain number of possible additive manufacturing processes based on the at least one certified data set (4) by means of a certain additive manufacturing device (5).

11. Method according to any one of the preceding claims, wherein the at least one certified data set (4) is encrypted.

12. Method according to any one of the preceding claims, wherein the user-side access portal (12), in particular as a plug-in solution, is provided on a portable, handed over to a user or handed over data carrier, from which it is or can be retrieved by a user.

13. System (1) for additive manufacturing of at least one component (2) defined component properties according to the method according to one of the preceding claims, comprising
- at least one associated with a provider, a data memory (10) comprising at least one communication network connected data storage device (3), which is set up for providing at least one certified data record (4) on the data memory (10) connected to at least one communication network, from which at least one certified data record (4) can be retrieved by a user,
wherein the at least one certified data set (4) certified by the provider for an additive manufacturing process of at least one particular component (2) defined component properties includes component-specific parameters and/or plant-specific parameters and/or process-specific parameters, wherein the at least one certified data set (4) includes machine-readable control information for fully automatic control of the operation of the at least one additive manufacturing device (5) for additive manufacturing of the at least one component (2) to be manufactured additively based on the at least one certified data set (4),
wherein the corresponding control information is a respective machine code of a respective additive manufacturing device, wherein the at least one certified data set (4), in particular its content, is not changeable by a user;
- at least one additive manufacturing device (5) assigned to a user, which is set up for applying at least one additive manufacturing process for additive manufacturing of at least one component (2) defined component properties on the basis of at least one certified data set (4);
- a user-side access portal which is set up so that the at least one certified data set (4) can be accessed on it or that the at least one certified data set (4) is stored on it and which is set up so that the at least one certified data set (4) can be accessed from it on the at least one additive manufacturing device (5) assigned to the user;
wherein the at least one additive manufacturing device (5) associated with the user is set up to carry out the at least one additive manufacturing process for the production of the component (2) defined component properties without user intervention solely on the basis of the control information contained in the at least one certified data set (4).

## Revendications

1. Procédé de fabrication additive d'au moins un composant (2), en particulier d'une pièce de rechange ou d'une pièce d'adaptation d'une installation d'emballage pour l'emballage d'objets tiers, caractéristiques définies du composant, au moyen d'au moins une installation de fabrication additive (5) d'un utilisateur, **caractérisé par**:
- fournir au moins un ensemble de données certifié (4) par un fournisseur, le fournisseur fournissant au moins un ensemble de données certifié (4) sur une banque de données (10) connectée à au moins un réseau de communication, dont au moins un ensemble de données certifié est récupéré par l'utilisateur,
dans lequel au moins un ensemble de données certifié (4) contient des paramètres spécifiques à la pièce et/ou à l'installation et/ou des paramètres spécifiques au processus, certifiés par le fournisseur pour un procédé de fabrication additive d'au moins un composant donné (2), et au moins un ensemble de données certifié (4) contient des informations de commande lisibles par machine pour contrôler de manière entièrement automatique le fonctionnement d'au moins une installation de fabrication additive (5) pour la fabrication additive d'au moins un composant à fabriquer additive (2) sur la base d'au moins un ensemble de données certifié (4),
lorsque les informations fiscales pertinentes sont un code machine correspondant d'une installation de fabrication additive donnée, dont au moins un ensemble de données certifié (4), en particulier son contenu, n'est pas modifiable par un utilisateur;
- Effectuer au moins un procédé de fabrication additive à l'aide d'au moins une installation de fabrication additive (5) de l'utilisateur pour la fabrication additive d'au moins un composant (2) de caractéristiques de composant définies sur la base d'au moins un ensemble de données certifié (4), dans lequel:
au moins un ensemble de données certifié (4) est consulté ou stocké sur un portail d'accès côté utilisateur à partir duquel il est consulté sur au moins une installation de fabrication additive côté utilisateur (5);
où au moins un procédé de fabrication additive pour la fabrication du composant (2) des caractéristiques définies du composant est effectué sans intervention de l'utilisateur uniquement sur la base des informations de contrôle contenues dans au moins un ensemble de données certifié (4).

2. Procédé selon la revendication 1, comprenant la mise à disposition complète du ou au moins d'un ensemble de données certifié (4') comprenant des paramètres spécifiques à l'installation et/ou des paramètres spécifiques à la construction et/ou des paramètres spécifiques au procédé, certifiés par un fournisseur pour la préparation d'un procédé de fabrication additive du ou au moins d'un composant à fabriquer additivement (2) de propriétés de composant définies,
- appliquer au moins une mesure de préparation du procédé de fabrication additive ou au moins une mesure de préparation du procédé de fabrication additive pour la fabrication additive d'au moins un composant (2) de caractéristiques de composant définies sur la base d'au moins un ensemble de données certifié (4'), la mesure au moins de préparation du procédé de fabrication additive comprenant notamment une mesure de préparation d'un matériau de construction à utiliser dans le cadre du procédé de fabrication additive effectué pour la fabrication additive d'un composant (2) de caractéristiques de composant déterminées comprenant la trempe et/ou le séchage et/ou l'inertage du matériau de construction; et/ou
fournir le ou au moins un ensemble de données certifié (4") comprenant des paramètres spécifiques à l'installation et/ou des paramètres spécifiques à la construction et/ou des paramètres spécifiques au processus, certifiés par un fournisseur pour le suivi du ou au moins d'un procédé de fabrication additive d'au moins un composant (2) défini par des caractéristiques de composant;
- Appliquer au moins une mesure de post-traitement du procédé de fabrication additive ou au moins une mesure de post-traitement du procédé de fabrication additive pour la fabrication additive d'au moins un composant (2) de caractéristiques de composant définies sur la base d'au moins un ensemble de données certifié (4"), dont au moins une mesure de post-traitement du procédé de fabrication additive comprenant notamment une mesure de post-traitement du composant (2) de fabrication additive dans le cadre du procédé de fabrication additive comprenant un post-traitement mécanique et/ou thermique du composant (2) de fabrication additive.

3. Procédé selon l'une quelconque des revendications précédentes, fournissant un ensemble de données certifié qui:
- comprend au moins un paramètre géométrique-constructif du composant à fabriquer au moins un additif (2), en particulier tous les paramètres géométriques-constructifs du composant à fabriquer au moins un additif (2), en tant que paramètres spécifiques au composant, et/ou
- contient au moins un paramètre chimique du composant à fabriquer au moins un additif (2), en particulier tous les paramètres chimiques du composant à fabriquer au moins un additif (2), en tant que paramètre spécifique au composant, et/ou
- contient au moins un paramètre physique du composant à fabriquer au moins un additif (2), en particulier tous les paramètres physiques du composant à fabriquer au moins un additif (2), en tant que paramètre spécifique au composant.

4. Procédé selon l'une quelconque des revendications précédentes, fournissant un ensemble de données certifié qui:
- comprend au moins un paramètre dimensionnel d'au moins un champ de construction au moins d'une installation de fabrication additive (5) à utiliser ou à utiliser pour la fabrication additive d'aumoins un composant (2) à fabriquer de manière additive, en particulier tous les paramètres dimensionnels d'au moins un champ de construction au moins d'une installation de fabrication additive (5) à utiliser ou à utiliser pour la fabrication additive d'au moins un composant (2) à fabriquer de manière additive, en tant que paramètres spécifiques à l'installation, et/ou
- comprend au moins un paramètre dimensionnel d'au moins un volume de construction d'au moins une installation de fabrication additive (5) à utiliser ou à utiliser pour la fabrication additive d'au moins un composant (2) à fabriquer de manière additive, en particulier tous les paramètres dimensionnels d'au moins un volume de construction d'au moins une installation de fabrication additive (5) à utiliser ou à utiliser pour la fabrication additive d'au moins un composant (2) à fabriquer de manière additive, en tant que paramètres spécifiques à l'installation, et/ou
- comprend au moins un paramètre de fabrication, en particulier un paramètre de taux de construction, au moins une installation de fabrication additive (5) à utiliser ou à utiliser pour la fabrication additive d'au moins un composant (2) à fabriquer de manière additive, en particulier tous les paramètres de fabrication d'au moins une installation de fabrication additive (5) à utiliser ou à utiliser pour la fabrication additive d'au moins un composant (2) à fabriquer de manière additive, en tant que paramètres spécifiques à l'installation,
- contient au moins un paramètre de type d'installation, en particulier un paramètre de fabricant et/ou de modèle, au moins un équipement de fabrication additive (5) à utiliser ou à utiliser pour la fabrication additive d'au moins un composant (2) à fabriquer additive, en particulier tous les paramètres de type d'installation au moins un équipement de fabrication additive (5) à utiliser ou à utiliser pour la fabrication additive d'au moins un composant (2) à fabriquer additive, en tant que paramètre spécifique à l'installation.

5. Procédé selon l'une quelconque des revendications précédentes, fournissant un ensemble de données certifié qui:
- au moins un paramètre de matériau de construction d'au moins un matériau de construction qui peut être utilisé pour la fabrication additive par au moins une installation de fabrication additive (5) à utiliser ou à utiliser pour la fabrication additive d'au moins un composant (2) à fabriquer additive, en particulier tous les paramètres de matériau de construction d'au moins un matériau de construction qui peut être utilisé comme paramètre spécifique au processus par au moins une installation de fabrication additive (5) à utiliser ou à utiliser pour la fabrication additive d'au moins un composant (2) à fabriquer additive, et/ou
- contient au moins un paramètre de procédé chimique, en particulier l'atmosphère chimique, au sein d'au moins un local de construction et/ou de processus, au moins un équipement de fabrication additive (5) à utiliser ou à utiliser pour la fabrication additive d'au moins un composant (2) à fabriquer additive, en particulier tous les paramètres de procédé chimique d'au moins un local de construction et/ou de processus, au moins un équipement de fabrication additive (5) à utiliser ou à utiliser pour la fabrication additive d'au moins un composant (2) à fabriquer additive, en tant que paramètre spécifique au procédé, et/ou
- comprend au moins un paramètre de procédé physique, en particulier l'humidité, la pression, la température, à l'extérieur et/ou à l'intérieur d'au moins un local de construction et/ou de processus d'au moins un équipement de fabrication additive (5) à utiliser ou à utiliser pour la fabrication additive d'au moins un composant à fabriquer de manière additive (2), en particulier tous les paramètres de procédé physique d'au moins un local de construction et/ou de processus d'au moins un équipement de fabrication additive (5) à utiliser ou à utiliser pour la fabrication additive d'au moins un composant à fabriquer de manière additive (5), en tant que paramètre spécifique au procédé, et/ou
- comprend au moins un paramètre de procédé climatique, en particulier l'humidité, la pression, la température, au moins un environnement d'au moins une installation de fabrication additive (5) à utiliser ou à utiliser pour la fabrication additive d'au moins un composant (2) à fabriquer de manière additive, en particulier tous les paramètres de procédé climatique d'au moins une installation de fabrication additive (5) à utiliser ou à utiliser pour la fabrication additive d'au moins un composant (2) à fabriquer de manière additive, en tant que paramètre spécifique au procédé, et/ou
- au moins une division du composant à fabriquer au moins un additif (2) en une seule section transversale du paramètre de couche descriptif comprenant au moins un composant à fabriquer au moins un additif (2), en particulier toutes les divisions du composant à fabriquer au moins un additif (2) en une seule section transversale du paramètre de couche descriptif comprenant au moins un composant à fabriquer au moins un additif (2), en tant que paramètres spécifiques au processus, et/ou
- contient au moins un paramètre, en particulier un paramètre de conception géométrique et/ou un paramètre d'agencement par rapport à un élément de support à fabriquer ou à fabriquer de manière additive (2), au moins un élément de support à l'appui d'au moins un élément de support à fabriquer ou à fabriquer de manière additive, en particulier tous les paramètres d'au moins un élément de support à l'appui d'au moins un élément de support à fabriquer ou à fabriquer de manière additive (2), en tant que paramètre spécifique au processus, et/ou
- contient au moins un paramètre de stratégie de construction descriptif d'au moins un composant à fabriquer de manière additive (2), en particulier tous les paramètres de stratégie de construction descriptifs d'au moins un composant à fabriquer de manière additive (2), en tant que paramètres spécifiques au processus.

6. Procédé selon l'une quelconque des revendications précédentes, dans lequel l'ensemble de données certifié comprend au moins un paramètre géométrique-constructif d'au moins un élément de support servant à soutenir au moins un composant à fabriquer ou à fabriquer de manière additive (2) en tant que paramètre spécifique au procédé, dans lequel:
qu'au moins un élément de support soit pourvu d'au moins un élément structurel facilitant le retrait d'au moins un élément de support de l'élément (2) fabriqué de manière additive, en particulier d'un affaiblissement d'au moins un élément de support et/ou d'un marquage mettant en évidence visuellement l'élément de support à retirer.

7. Procédé selon l'une quelconque des revendications précédentes, comprenant des comparaisons complètes d'au moins une caractéristique de composant définie dans le cadre de la fabrication additive d'au moins un composant à fabriquer de manière additive (2) à l'aide d'un dispositif de détection (7), la fabrication additive d'au moins un paramètre relatif à au moins un composant à fabriquer de manière additive (2) à l'aide d'au moins un paramètre de référence correspondant, en particulier; à titre facultatif, l'évaluation complète des informations comparatives en ce qui concerne au moins un critère d'évaluation, en particulier si celui-ci indique un dépassement ou un dépassement d'au moins une valeur limite ou plage de valeurs limites spécifique à un paramètre.

8. Procédé selon l'une quelconque des revendications précédentes, dans lequel au moins un ensemble de données certifié (4) est ou a été produit par le fournisseur sur la base des informations fournies par le fournisseur, en particulier sur la base des informations fournies par le fournisseur, de préférence dans des conditions de fabrication définies, le cas échéant des résultats de fabrication obtenus empiriquement d'un composant de référence correspondant au composant (2) à fabriquer de manière additive.

9. Procédé selon l'une quelconque des revendications 1 à 7, dans lequel au moins un ensemble de données certifié (4) est ou a été produit par l'utilisateur ou un tiers sur la base d'informations de l'utilisateur ou du tiers, en particulier sur la base de l'utilisateur ou du tiers, de préférence dans des conditions de fabrication définies, le cas échéant des résultats de fabrication obtenus empiriquement d'un composant de référence correspondant au composant à fabriquer de manière additive (2), dans lequel les informations de l'utilisateur ou du tiers sont autorisées par le fournisseur en ce qui concerne au moins un critère d'autorisation prédéfini ou prédéfini par le fournisseur et ne sont autorisées en tant qu'ensemble de données certifié (4) qu'avec l'autorisation positive du fournisseur.

10. Procédé selon l'une quelconque des revendications précédentes, dans lequel au moins un ensemble de données certifié (4) comprend un certain nombre d'opérations de fabrication additive possibles sur la base d'au moins un ensemble de données certifié (4) au moyen d'un dispositif de fabrication additive déterminé (5).

11. Procédé selon l'une quelconque des revendications précédentes, dans lequel au moins un jeu de données certifié (4) est crypté.

12. Procédé selon l'une quelconque des revendications précédentes, dans lequel le portail d'accès côté utilisateur (12), notamment en tant que solution plug-in, est mis à disposition sur un support de données portable, livrable ou remis à un utilisateur, à partir duquel il est ou peut être consulté par un utilisateur.

13. Système (1) pour la fabrication additive d'au moins un composant (2) de propriétés de composant définies selon le procédé selon l'une quelconque des revendications précédentes, comprenant:
- au moins un dispositif de mise à disposition (3) associé à un fournisseur et comprenant une banque de données connectée à au moins un réseau de communication (10) et mis en place pour fournir au moins un ensemble de données certifié (4) sur la banque de données connectée à au moins un réseau de communication (10) à partir de laquelle au moins un ensemble de données certifié (4) peut être consulté par un utilisateur,
dans lequel au moins un ensemble de données certifié (4) contient des paramètres spécifiques à la pièce et/ou à l'installation et/ou des paramètres spécifiques au processus, certifiés par le fournisseur pour un procédé de fabrication additive d'au moins un composant donné (2), et au moins un ensemble de données certifié (4) contient des informations de commande lisibles par machine pour contrôler de manière entièrement automatique le fonctionnement d'au moins une installation de fabrication additive (5) pour la fabrication additive d'au moins un composant à fabriquer additive (2) sur la base d'au moins un ensemble de données certifié (4),
lorsque les informations fiscales pertinentes sont un code machine correspondant d'une installation de fabrication additive donnée, dont au moins un ensemble de données certifié (4), en particulier son contenu, n'est pas modifiable par un utilisateur;
- au moins un équipement de fabrication additive (5) assigné à un utilisateur et conçu pour appliquer au moins un procédé de fabrication additive à la fabrication additive d'au moins un composant (2) de caractéristiques de composant définies sur la base d'au moins un ensemble de données certifié (4);
- un portail d'accès côté utilisateur qui dispose qu'au moins un ensemble de données certifié (4) peut être consulté sur celui-ci ou qu'au moins un ensemble de données certifié (4) est stocké sur celui-ci et qui dispose qu'au moins un ensemble de données certifié (4) peut être consulté par celui-ci sur au moins une installation de fabrication additive attribuée à l'utilisateur (5);
où au moins une installation de fabrication additive attribuée à l'utilisateur (5) est mise en place pour réaliser au moins un procédé de fabrication additive pour la fabrication du composant (2), sans intervention de l'utilisateur, sur la seule base des informations de contrôle contenues dans au moins un ensemble de données certifié (4).
